(19) Europäisches Patentamt
European Patent Office
Office européen des brevets

(11) **EP 1 523 719 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(21) Anmeldenummer: **03764912.6**

(22) Anmeldetag: **25.02.2003**

(51) Int Cl.:
**G10H 3/12** (2006.01)    **G10L 15/02** (2006.01)

(86) Internationale Anmeldenummer:
**PCT/EP2003/001916**

(87) Internationale Veröffentlichungsnummer:
**WO 2004/010327 (29.01.2004 Gazette 2004/05)**

(54) **VORRICHTUNG UND VERFAHREN ZUM CHARAKTERISIEREN EINES INFORMATIONSSIGNALS**

DEVICE AND METHOD FOR CHARACTERISING AN INFORMATION SIGNAL

SYSTEME ET PROCEDE POUR CARACTERISER UN SIGNAL D'INFORMATION

(84) Benannte Vertragsstaaten:
**AT CH DE FR GB IE LI**

(30) Priorität: **19.07.2002 DE 10232916**

(43) Veröffentlichungstag der Anmeldung:
**20.04.2005 Patentblatt 2005/16**

(73) Patentinhaber: **C.H.I. Development Management Limited XXXIV, LLC Wilmington DE 19808 (US)**

(72) Erfinder:
• **KLEFENZ, Frank**
  **68159 Mannheim (DE)**
• **BRANDENBURG, Karlheinz**
  **91054 Erlangen (DE)**

(74) Vertreter: **Carpmaels & Ransford One Southampton Row London WC1B 5HA (GB)**

(56) Entgegenhaltungen:
**WO-A-01/88900      US-A- 5 033 089**
**US-A- 5 983 176**

• **DAVY M, GODSILL S J: "AUDIO INFORMATION RETRIEVAL: A BIBLIOGRAPHICAL STUDY" CAMBRIDGE UNIVERSITY ENGINEERING DEPARTMENT/TECHNICAL REPORT, [Online] Februar 2002 (2002-02), Seiten 1-41, XP002269098 Cambridge, UK Gefunden im Internet: <URL:http://www-sigproc.eng.cam.ac.uk/~md2 83/davy_tr429.pdf> [gefunden am 2004-01-13]**
• **ALLAMANCHE ET AL: "Content-based Identification of Audio Material Using MPEG-7 Low Level Description" PROCEEDINGS ANNUAL INTERNATIONAL SYMPOSIUM ON MUSIC INFORMATION RETRIEVAL, XX, XX, 15. Oktober 2001 (2001-10-15), Seiten 1-8, XP002198244**

EP 1 523 719 B1

**Beschreibung**

Die vorliegende Erfindung bezieht sich auf die Verarbeitung von Informationssignalen und insbesondere auf die Merkmalsextraktion von Informationssignalen beispielsweise zur Charakterisierung der Informationssignale oder zur Identifikation und Datenbanksuche.

Konzepte, durch die Zeitsignale mit einem harmonischen Anteil, wie z. B. Audiodaten, identifizierbar und referenzierbar sind, sind für viele Anwender nützlich. Insbesondere in einer Situation, in der ein Audiosignal vorliegt, dessen Titel und Autor unbekannt sind, ist es oftmals wünschenswert, herauszufinden, von wem das entsprechende Lied stammt. Ein Bedarf hierzu besteht beispielsweise, wenn der Wunsch vorhanden ist, z. B. eine CD des betreffenden Interpreten zu erwerben. Wenn das vorliegende Audiosignal lediglich den Zeitsignalinhalt umfaßt, jedoch keinen Namen über den Interpreten, den Musikverlag etc., so ist eine Identifizierung des Ursprungs des Audiosignals bzw. von wem ein Lied stammt, nicht möglich. Die einzige Hoffnung bestand dann darin, das Audiostück samt Referenzdaten bezüglich des Autors oder der Quelle, wo das Audiosignal zu erwerben ist, noch einmal zu hören, um dann den gewünschten Titel beschaffen zu können.

Im Internet ist es nicht möglich, Audiodaten unter Verwendung herkömmlicher Suchmaschinen zu suchen, da die Suchmaschinen lediglich mit textuellen Daten umgehen können. Audiosignale bzw. allgemeiner gesagt, Zeitsignale, die einen harmonischen Anteil haben, können durch solche Suchmaschinen nicht verarbeitet werden, wenn sie keine textuellen Suchangaben umfassen.

Ein realistischer Bestand an Audiodateien liegt bei mehreren tausend gespeicherten Audiodateien bis zu hunderttausenden von Audiodateien. Musikdatenbankinformationen können auf einem zentralen Internet-Server abgelegt sein, und potentielle Suchanfragen könnten über das Internet erfolgen. Alternativ sind bei heutigen Festplattenkapazitäten auch die zentrale Musikdatenbanken auf lokalen Festplattensystemen von Benutzern denkbar. Es ist wünschenswert, solche Musikdatenbanken durchsuchen zu können, am Referenzdaten über eine Audiodatei zu erfahren, von der lediglich die Datei selbst, jedoch keine Referenzdaten bekannt sind.

Darüber hinaus ist es gleichermaßen wünschenswert, Musikdatenbanken unter Verwendung vorgegebener Kriterien durchsuchen zu können, die beispielsweise dahingehend lauten, ähnliche Stücke herausfinden zu können. Ähnliche Stücke sind beispielsweise die Stücke mit einer ähnlichen Melodie, einem ähnlichen Instrumentensatz, oder einfach mit ähnlichen Geräuschen, wie z. B. Meeresrauschen, Vogelgezwitscher, männliche Stimmen, weibliche Stimmen, etc.

Das U.S.-Patent Nr. 5,918,223 offenbart ein Verfahren und eine Vorrichtung für eine Inhalts-basierte Analyse, Speicherung, Wiedergewinnung und Segmentierung von Audioinformationen. Dieses Verfahren beruht darauf, mehrere akustische Merkmale aus einem Audiosignal zu extrahieren. Gemessen werden Lautstärke, Baß, Tonhöhe, Brightness und Melfrequenz-basierte Cepstral-Koffizienten in einem Zeitfenster bestimmter Länge in periodischen Intervallabständen. Jeder Meßdatensatz besteht aus einer Folge von gemessenen Merkmalsvektoren. Jede Audiodatei ist durch den kompletten Satz der pro Merkmal berechneten Merkmalsfolgen spezifiziert. Ferner werden die ersten Ableitungen für jede Folge von Merkmalsvektoren berechnet. Dann werden statistische Werte wie Mittelwert und Standardabweichung berechnet. Dieser Satz von Werten wird in einem N-Vektor, d. h. einem Vektor mit n Elementen, gespeichert. Diese Vorgehensweise wird auf eine Vielzahl von Audiodateien angewendet, um für jede Audiodatei einen N-Vektor abzuleiten. Damit wird nach und nach eine Datenbank aus einer Vielzahl von N-Vektoren aufgebaut. Aus einer unbekannten Audiodatei wird dann unter Verwendung derselben Vorgehensweise ein Such-N-Vektor extrahiert. Bei einer Suchanfrage wird dann eine Abstandsberechnung des vorgegebenen N-Vektors und der in der Datenbank gespeicherten N-Vektoren ermittelt. Schließlich wird der N-Vektor ausgegeben, der den minimalen Abstand zu dem Such-N-Vektor hat. Dem ausgegebenen N-Vektor sind Daten über den Autor, den Titel, die Beschaffungsquelle etc. zugeordnet, so daß eine Audiodatei hinsichtlich ihres Ursprungs identifiziert werden kann.

Dieses Verfahren hat den Nachteil, daß mehrere Merkmale berechnet werden und willkürliche Heuristiken zur Berechnung der Kenngrößen eingeführt werden. Durch Mittelwert- und Standardabweichungsberechnungen über alle Merkmalsvektoren für eine gesamte Audiodatei wird die Information, die durch den zeitlichen Verlauf der Merkmalsvektoren gegeben ist, auf wenige Merkmalsgrößen reduziert. Dies führt zu einem hohen Informationsverlust.

Grundsätzlich haben alle sogenannten Features bzw. Merkmale, die zur Identifikation von Informationssignalen eingesetzt werden, zwei gegenläufige Anforderungen zu erfüllen. Die eine Anforderung besteht darin, eine möglichst gute Charakterisierung eines Informationssignals zu liefern. Die andere Anforderung besteht darin, daß das Merkmal oder Feature nicht besonders viel Speicherplatz in Anspruch nehmen darf, also so wenig Informationen als möglich haben darf. Im Hinblick auf den Speicherplatz kleinere Features haben unmittelbar kleinere Informationssignaldatenbanken zur Folge und resultieren auch in einer schnelleren Datenbanksuche, um eine qualitative Aussage über ein zu testendes Informationssignal oder sogar eine quantitative Aussage über ein solches Informationssignal treffen zu können.

Eine weitere ebenfalls wichtige Anforderung an das aus dem Informationssignal zu extrahierende Merkmal besteht darin, daß das Merkmal robust gegenüber Veränderungen sein sollte. Solche Veränderungen bestehen in einem systemimmanenten Rauschen, einer Verzerrung z. B. aufgrund eines verlustbehafteten Codierverfahrens. Andere Signalveränderungen sind beispielsweise Änderungen der Lautstärke am Beispiel eines Audiosignals sowie Verzerrungen aufgrund eines Abspielens eines Audiosignals über einen Lautsprecher und Wiederaufzeichnen des Audiosignals über ein Mikrophon etc.

Die Aufgabe der vorliegenden Erfindung besteht darin, ein flexibles und robustes Konzept zum Charakterisieren eines Informationssignals zu schaffen.

Diese Aufgabe wird durch eine Vorrichtung zum Aufbauen einer Audiosignal- oder visuellen signal-datenbank nach Patentanspruch 1, ein Verfahren zum Aufbauen einer Audiosignal- oder visuellen signal datenbank nach Patentanspruch 22, eine Vorrichtung zum Identifizieren eines Audiosignals oder visuellen signals nach Patentanspruch 2, ein Verfahren zum Identifizieren eines Audiosignals oder visuellen Signals nach Patentanspruch 23 oder ein Computer-Programm nach Patentanspruch 24 gelöst.

Der vorliegenden Erfindung liegt die Erkenntnis zugrunde, daß eine einerseits charakteristische Darstellung eines Informationssignals und andererseits eine Darstellung des Informationssignals mit begrenztem Speicheraufwand dadurch erreicht werden kann, daß der Amplituden-Zeit-Verlauf des Informationssignals dahingehend verarbeitet wird, daß lokale Extremwerte bestimmt werden, und daß Flächeninformationen im Falle eines Informationssignals mit eindimensionaler Amplitude oder Volumeninformationen im Falle eines Audiosignals mit zweidimensionaler Amplitude von Tälern oder Bergen des Informationssignals ermittelt werden, wobei jedem Tal oder Berg des Informationssignals ein lokaler Extremwert sowie ein zeitlicher Abschnitt zugeordnet ist, wobei sich der zeitliche Abschnitt des Informationssignals für einen Berg oder für ein Tal von dem Zeitpunkt des lokalen Extremwerts bis zu einem zeitlich benachbarten Wert des Informationssignals erstreckt, der die gleiche Amplitude wie der lokale Extremwert aufweist. Dadurch werden Flächeninformationen bzw. Volumeninformationen in zeitlich aufeinanderfolgender Darstellung erhalten, die für das Informationssignal charakteristisch sind.

Die vorliegende Erfindung ist dahingehend vorteilhaft, daß die charakteristischen Eigenschaften eines Amplituden-Zeit-Verlaufs in Form von Flächeninformationen oder Volumeninformationen integrale Größen sind, die im Gegensatz beispielsweise zu Amplituden-Zeit-Tupel oder zu sonstigen eher an den akustischen Eigenschaften eines Audiosignals angenäherten Merkmalen, relativ invariante Größen sind, die in ihrer tatsächlichen quantitativen Größe oder zumindest in ihrer relative Größe in Hinblick auf eine zeitliche Folge gegenüber Verzerrungen, Rauschen etc. eine hohe Robustheit aufweisen.

Darüber hinaus ermöglicht das erfindungsgemäße Konzept der Darstellung eines Informationssignals durch integrale Größen, die vom Amplituden-Zeit-Verlauf des Informationssignals abgeleitet sind, eine stark komprimierte Darstellung, die im Hinblick auf eine Informationssignal-Identifikation zum einen zu kleinen Datenbanken führt und zum anderen zu kurzen Suchdauern zum Durchsuchen einer Datenbank unter Verwendung einer solchen Charakteristik eines zu testenden Signals.

Ein weiterer Vorteil des erfindungsgemäßen Konzepts besteht darin, daß die Darstellung eines Informationssignals mit einem Amplituden-Zeit-Verlauf anhand von integralen Flächen- oder Volumeninformationen in zeitlicher Folge besonders gut für Informationssignale geeignet sind, die sich wiederholende Grundstrukturen haben, wie z. B. Audiosignale. So liefern Instrumente beispielsweise ein Signal, das für jedes Instrument charakteristisch ist, und das insbesondere eine für jedes Instrument charakteristische Folge von Flächeninformationen aufweist. Sich wiederholende Muster treten auf, wenn ein Instrument aufeinanderfolgende Töne spielt. Dieses Muster findet sich unmittelbar in den aufeinanderfolgenden Flächeninformationen wieder. Eine Mustererkennung der Folge von Flächeninformationen kann daher dazu verwendet werden, das Audiosignal zu segmentieren, um diverse Nachverarbeitungen vornehmen zu können, wie z. B. eine Polyphonklangerkennung, eine Musikinstrumentenerkennung oder eine Melodieerkennung. Darüber hinaus zeichnen sich gesprochene Laute durch sich wiederholende Signalmuster aus. Daher ist das erfindungsgemäße Konzept auch zur Nachverarbeitung von Sprachsignalen geeignet, um beispielsweise eine Spracherkennung durchzuführen.

Quasi-stationäre Audiosignale als Beispiel für Informationssignale, die sich besonders gut für das erfindungsgemäße Konzept eignen, wobei die Audiosignale beispielsweise durch Sprachlaute oder Musikinstrumenten-Laute dargestellt sind, zeichnen sich dadurch aus, daß Replika des gleichen bzw. eines nur langsam veränderlichen Bodenprofils bzw. der gleichen oder einer nur langsam veränderlichen Audiosignalform n-fach aneinander gereiht werden, abhängig davon, wie lange der Sprachlaut gehalten bzw. wie lange der Ton angehalten wird. Replika der gleichen Signalform werden lokal festgestellt, indem gleiche oder nur geringfügig abweichende Flächeninformationen der Folge von Flächeninformationen vorzugsweise des Original- und des Komplementärsignals miteinander verglichen werden.

Gleiche Wellenzüge werden also dadurch identifiziert, daß gleiche Flächeninhalte assoziiert werden. Der absolute Inhalt, d. h. ein Flächenintegral, kann aber auch angeben, ob es sich um einen Vokal, Konsonant, ein bestimmtes Musikinstrument, einen hochfrequenten Ton etc. handelt.

Bevorzugte Ausführungsbeispiele der vorliegenden Erfindung werden nachfolgend Bezug nehmend auf die beiliegenden Zeichnungen detailliert erläutert. Es zeigen:

Fig. 1    ein Blockschaltbild einer erfindungsgemäßen Vorrichtung zum Charakterisieren eines Informationssignals;

Fig. 2    ein Blockschaltbild einer erfindungsgemäßen Vorrichtung zum Aufbauen einer Informationssignal-Datenbank;

Fig. 3    ein Blockschaltbild einer erfindungsgemäßen Vorrichtung zum Identifizieren eines Test-Informationssignals unter Verwendung einer Informationssignal-Datenbank;

Fig. 4    einen Amplituden-Zeit-Verlauf eines beispielhaften Informationssignals mit eingezeichneten Flächeninformationen für lokale Maxima und lokale Minima;

Fig. 5    ein beispielhaftes Signalformdiagramm für einen gesprochenen Vokal "o"; und

Fig. 6    ein Amplituden-Zeit-Verlauf zur Darstellung der Normierung einer Fläche bzw. eines Volumens auf eine Gesamtfläche bzw. ein Gesamtvolumen.

Bevor detaillierter auf die nachfolgenden Figuren eingegangen wird, wird zunächst zur besseren Anschaulichkeit der Erfindung das allgemeine Prinzip erläutert. In Anlehnung an die nachfolgende Erörterung wird das erfindungsgemäße Konzept für Audiosignale als Informationssignale auch als "Audio-Watershed" bezeichnet. Dieses Konzept ist ein Konzept, mit dem Audiosignale in Intervalle unterteilbar sind. In der Geodäsie ist das Konzept sehr anschaulich beschreibbar.

Berg- und Talbodenformationen werden von Regenwasser angefüllt. Das Wasser sammelt sich in Talsenken und umströmt Bergkuppen. Der maximale Füllstand einer isolierten Region ist durch das zweidimensionale Bodenprofil und die Höhe der geringsten Durchlaßstelle gegeben. Die aufgenommene Wassermenge kann einfach bestimmt werden, indem gemessen wird, welche Wassermenge der kontinuierlich strömenden Regenwasserquelle bis zum Überlauf entnommen wurde.

Für eindimensionale Informationssignale, beispielsweise Audiosignale, verteilen sich die herabregnenden Wassermengen über den gesamten Verlauf der Audiowellenzüge. Zwischen zwei benachbarten lokalen Wellenmaximas bleibt das Wasser stehen und wird eingeschlossen. Sukzessive können weitere Teilbereiche geflutet werden, bis zum Schluß auch das Amplitudenmaximum der gesamten Signaldarstellung geflutet ist. Zu diesem Zweck müßte angenommen werden, daß die Ränder am Anfang und am Ende des Signals hoch sind, und zwar mindestens höher als das globale Maximum des Signals. Dieses Konzept funktioniert jedoch auch ohne die Annahme solcher hoher Ränder. Dann wird das Maximum nicht geflutet, sondern das Wasser steigt nur bis zur Höhe des zweithöchsten Maximums an.

Zur detaillierteren Darstellung des Signals wird es bevorzugt, den Signalverlauf längs der t-Achse zu spiegeln, um ein komplementäres Informationssignal zu erhalten, um das invertierte Profil entsprechend durch Flächenbestimmung der Täler zu vermessen.

Nachdem sich insbesondere bei den beschriebenen Informationssignalen gleiche Wellenzüge periodisch quasistationär wiederholen, haben sie auch immer den gleichen "Wasserinhalt", so daß eine Segmentierung aufgrund des Wasserinhalts eines Wellenzugs, der sich aus mehreren Wasserinhalten der Täler, die in dem Wellenzug vorhanden sind, zusammensetzt, erfolgen kann. Gleiche Wellenzüge werden also dadurch identifiziert, daß gleiche Flächeninhalte assoziiert werden.

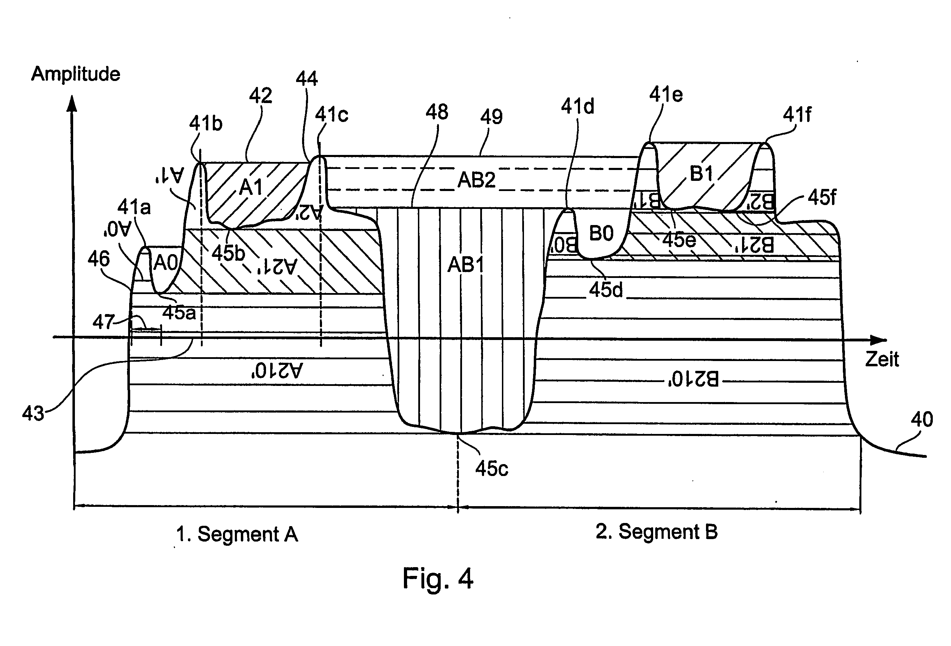

Wie es noch anhand von Fig. 4 erläutert werden wird, kann die Informationssignalcharakterisierung nicht nur anhand von Tälern, die durch lokale Maxima definiert sind, durchgeführt werden, sondern auch anhand von Bergen, deren Basislinie durch ein lokales Minimum definiert ist, und deren Gipfel durch den Signalverlauf begrenzt sind. Diese Darstellung ist gleichwertig zur Invertierung des ursprünglichen Informationssignals und zur Betrachtung der Täler im invertierten Informationssignal.

Das erfindungsgemäße Konzept ist für sämtliche Informationssignale, die einen Amplituden-Zeit-Verlauf aufweisen, der lokale Extremwerte hat, anwendbar. Solche Informationssignal können Audiosignale, Videosignale, Spannungssignale oder Stromsignale, die irgendwie geartete Meßgrößen identifizieren, etc. sein. Am Beispiel von Audiosignalen oder Videosignalen sei darauf hingewiesen, daß der zeitliche Verlauf, also das Informationssignal nicht unbedingt eine Spannungsamplitude oder eine Stromamplitude angeben muß, sondern daß das Informationssignal auch eine Leistung oder einen Schalldruck als Amplitude haben kann.

Darüber hinaus sei darauf hingewiesen, daß das Informationssignal eine eindimensionale Amplitude haben kann, wie z. B. bei einem Audiosignal, daß das Informationssignal jedoch auch eine zweidimensionale Amplitude haben kann, so daß der Amplituden-Zeit-Verlauf des Informationssignals tatsächlich dreidimensionale Berge und Täler umfaßt, während diese Berge und Täler im Falle eines Informationssignals mit eindimensionaler Amplitude lediglich einen zweidimensionalen Verlauf haben, also durch Flächeninformationen dargestellt werden können.

Darüber hinaus sei darauf hingewiesen, daß das Informationssignal selbstverständlich nicht ein kontinuierliches Signal sein muß, sondern daß dasselbe auch ein zeitdiskretes Signal sein kann, bei dem ein gedachter kontinuierlicher Verlauf aus Anschaulichkeitsgründen angenommen werden kann, der sich durch eine gerade Verbindung aufeinanderfolgender zeitdiskreter Signalwerte oder durch Interpolation ergibt.

Nachfolgend wird anhand von Fig. 4 die vorliegende Erfindung dargestellt. Fig. 4 zeigt ein Informationssignal 40 mit einem Amplituden-Zeit-Verlauf. Bei dem in Fig. 4 gezeigten Informationssignal handelt es sich um ein Informationssignal mit eindimensionaler Amplitude. Das dargestellte Informationssignal ist ein typisches Audiosignal, das sich wiederholende Wellenzüge hat, wobei ein Wellenzug im ersten Segment A dargestellt ist, während der sich wiederholende Wellenzug im zweiten Segment B dargestellt ist. Es sei darauf hingewiesen, daß sich das Informationssignal im zweiten Segment B selbstverständlich von dem Informationssignal im ersten Segment A unterscheidet, jedoch nicht in seiner grundsätzlichen Topologie sondern lediglich bei dem in Fig. 4 gezeigten Ausführungsbeispiel in der Amplitude zu bestimmten Zeitpunkten.

Das Informationssignal weist lokale Maxima 41a, 41b, 41c, 41d, 41e und 41f auf. Jedem lokalen Maximum ist ein eigenes Tal zugeordnet. Dem Maximum 41a ist das mit A0 bezeichnete Tal zugeordnet. Entsprechend ist dem Maximum 41b das Tal A1 zugeordnet. Darüber hinaus ist dem Maximum 41d das AB1 zugeordnet. Dem Maximum 41c ist nun, da ein Teil des gesamten Tals bereits durch AB1 dem Maximum 41d zugeordnet ist, lediglich der darüberliegende Rest des Tals, der mit AB2 bezeichnet ist, zugeordnet. Schließlich ist dem Maximum 41e das Tal B1 zugeordnet. Dem lokalen Maximum 41f in Fig. 4 ist kein eigenes Tal zugeordnet. Dies liegt jedoch lediglich daran, daß der weitere Verlauf des Informationssignals nicht mehr dargestellt ist.

Wie es aus Fig. 4 ersichtlich ist, ist jedes Tal durch einen zeitlichen Abschnitt definiert, der in Fig. 4 am Beispiel des Tals A1, dem das lokale Maximum 41b zugeordnet ist, mit 42 bezeichnet ist. Der zeitliche Abschnitt erstreckt sich insbesondere von dem Zeitpunkt 43 des Auftretens des lokalen Maximums 41b bis zu einem zeitlich benachbarten Wert des Informationssignals, der die gleiche Amplitude wie der lokale Extremwert aufweist. Dieser zeitliche Wert ist in Fig. 4 mit 44 bezeichnet. Damit ergibt sich die Fläche A1, die das dem lokalen Maximum 41b zugeordnete Tal repräsentiert. Entsprechend werden die anderen Täler A0, AB2, B0, B1 behandelt. Aus der Folge der Täler A0, A1, AB1, B0, B1 ergibt sich bereits eine Charakterisierung des Informationssignals, die zur Identifikation verwendet werden kann.

Erfindungsgemäß wird es jedoch bevorzugt, nicht nur die Flächeninformationen von Tälern des Informationssignals sondern auch die Flächeninformationen von Tälern des invertierten Informationssignals zu berechnen. Eine Inversion des Informationssignals kann erreicht werden, wenn Fig. 4 einfach umgedreht wird. Dies ist durch die umgekehrt geschriebenen Flächenidentifikatoren A0', A1', A2', A21', A210', B0', B1', B2', B21', B210' dargestellt.

Alternativ, wenn Fig. 4 nicht "umgedreht wird", so ergeben sich die "Berge", die jedem lokalen Minimum zugeordnet sind, folgendermaßen. Eine Untersuchung des Informationssignals liefert lokale Minima 45a, 45b, 45c, 45e, 45f. Der erste Berg A0' ist durch das lokale Minimum 45a sowie durch den zeitlich benachbarten Wert des Informationssignals bestimmt, der denselben Wert wie das lokale Minimum hat, also einen Wert 46 definiert. Zwischen dem Wert 46 und dem lokalen Minimum 45a ergibt sich der zeitliche Abschnitt 47, der den Berg A0' identifiziert. Zur Charakterisierung des Informationssignals wird nun die Fläche des Berges A0' gemäß der in Fig. 4 gezeigten Darstellung als Flächeninformationen berechnet. Analog hierzu wird mit dem Berg A1', A2' etc. vorgegangen. Aus Fig. 4 ist ferner ein Fall ersichtlich, bei dem sich der Berg A210', dem das lokale Minimum 45c zugeordnet ist, über einem Berg A21' befindet, dem das lokale Minimum 45a zugeordnet ist und insbesondere über den Bergen A1' und A2' befindet, denen das lokale Minimum 45b zugeordnet ist. Aus dem in Fig. 4 gezeigten Beispiel ist somit ersichtlich, daß einem lokalen Minimum auch zwei Flächeninformationen zugeordnet sein können, derart, daß dem lokalen Minimum 45b sowohl die Flächeninformation des Bergs A1' als auch die Flächeninformation des Bergs A2' zugeordnet ist. Entsprechendes gilt für das lokale Minimum 45a, dem sowohl die Flächeninformationen A0' als auch die Flächeninformationen A21' zugeordnet sind.

Bei der Betrachtung der Flächeninformationen A210', A21', A2' und A1' wird ersichtlich, daß hier dieselbe Vorgehensweise verwendet worden ist, wie sie anhand der übereinander liegenden Täler AB1 und AB2 erläutert worden ist.

Nach einer Bearbeitung des Informationssignals dahingehend, daß die Flächeninformationen sämtlicher Berge und Täler in Zuordnung zu den entsprechenden lokalen Maxima und Minima bzw. in Zuordnungen zu einem bestimmten Zeitpunkt sind, der ein ausgewählter Zeitpunkt aus dem zeitlichen Abschnitt ist, wird eine Folge von Flächeninformationen bzw. Volumeninformationen erhalten, wobei diese Folge von Zeit-Flächenwerten bzw. Zeit-Volumenwerten für das Informationssignal charakteristisch ist.

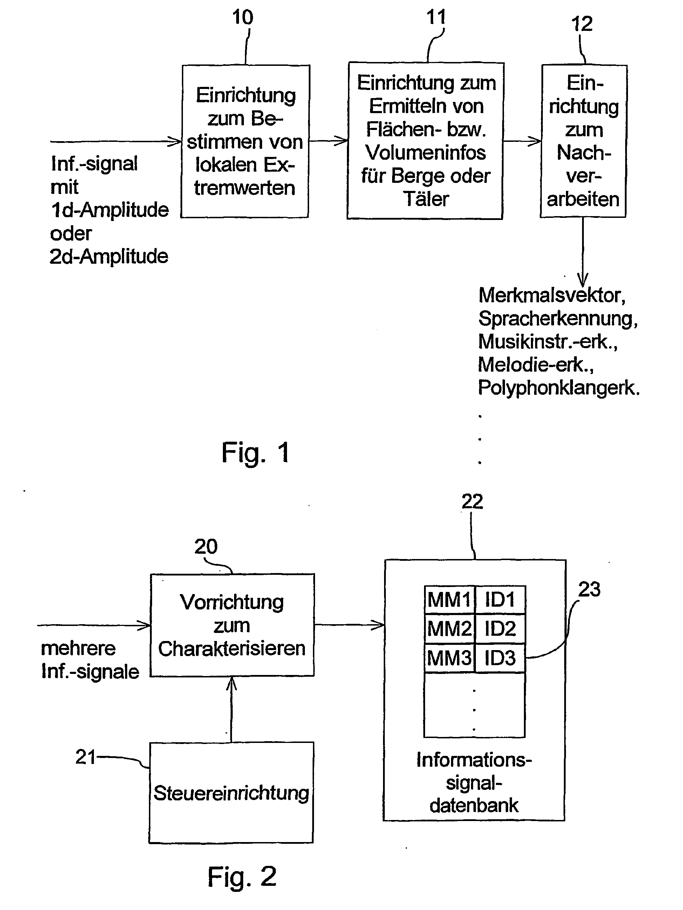

Nachfolgend wird Bezug nehmend auf Fig. 1 eine bevorzugte Vorrichtung zum Charakterisieren eines Informationssignals dargestellt. Die Vorrichtung zum Charakterisieren eines Informationssignals, das einen Amplituden-Zeit-Verlauf mit lokalen Extremwerten aufweist, umfaßt eine Einrichtung 10 zum Bestimmen von lokalen Extremwerten des Informationssignals, wobei ein lokaler Extremwert einen Zeitpunkt und einen Amplitudenwert umfaßt. Der Einrichtung 10 zum Bestimmen von lokalen Extremwerten ist eine Einrichtung 11 zum Ermitteln von Flächen- bzw. Volumeninformationen für Berge und Täler des Informationssignals nachgeschaltet. Die Einrichtung zum Ermitteln von Flächeninformationen oder Volumeninformationen ist wirksam, um die Fläche eines Tals oder Bergs zu berechnen, wobei ein Tal oder Berg durch einen zeitlichen Abschnitt des Informationssignals definiert ist, wobei sich der Abschnitt des Informationssignals von dem Zeitpunkt des lokalen Extremwerts bis zu einem zeitlich benachbarten Wert des Informationssignals, der die gleiche Amplitude wie der lokale Extremwert aufweist, erstreckt. Die Flächeninformationen von mehreren Bergen oder Tälern sind für das Informationssignal charakteristisch.

Vorzugsweise wird die Einrichtung 11 eine Folge von Flächeninformationen-Zeit-Werten erzeugen und einer Einrichtung 12 zum Nachverarbeiten zuführen, die ausgebildet ist, um einen nachverarbeiteten Merkmalsvektor auszugeben oder eine Spracherkennung, eine Musikinstrumentenerkennung, eine Melodieerkennung, eine Polyphonklangerkennung oder irgend eine sonstige Erkennung von Informationen durchzuführen, die in dem Informationssignal, das in die Einrichtung 10 eingespeist wird, enthalten sind.

Zur Bestimmung von lokalen Extremwerten durch die Einrichtung 10 können beliebige bekannte Konzepte hierfür verwendet werden, wie z. B. ein üblicher Minima-Maxima-Suchalgorithmus, der einen Abtastwert des Informationssignals mit dem vorherigen Abtastwert des Informationssignals vergleicht und dann ein lokales Maximum erkennt, wenn der zeitlich spätere Abtastwert kleiner als der zeitlich frühere Abtastwert ist, und wenn vorher ein lokales Minimum war. Der Algorithmus erkennt ferner ein lokales Minimum, wenn der zeitlich frühere Abtastwert größer als der zeitlich spätere Abtastwert ist, und wenn vorher ein lokales Maximum war. Alternativ kann der Maxima/Minima-Sucher auch ausgebildet sein, um mehrere aufeinanderfolgende Abtastwerte entsprechend auszuwerten. Um nicht durch ein dem Informationssignal überlagertes Rauschen beeinträchtigt zu werden, kann die Einrichtung 10 ferner ausgebildet sein, um vor der Maxima/Minima-Suche eine Tiefpaßfilterung des Informationssignals durchzuführen, um ein glatteres Informationssignal zu erhalten. Selbstverständlich sind beliebige andere Möglichkeiten denkbar, wie z. B. das Durchführen eines Polynomfits an das Informationssignal und das analytische Bestimmen von Extremwerten unter Verwendung der Polynomfitfunktionen. Alternativ könnte auch das direkt vorliegende ungefilterte Informationssignal verwendet werden, um sämtliche Maxima und Minima zu bestimmen, und um dann nachträglich die Berge oder Täler mit einem kleineren Flächeinhalt als einem vorgegebenen Schwellwert herauszufiltern bzw. in der weiteren Informationssignal-Charakterisierung nicht mehr zu verwenden.

Die Einrichtung 11 zum Ermitteln von Flächen- bzw. Volumeninformationen für Berge und Täler wird typischerweise als numerischer Integrator ausgebildet sein, um die Fläche zwischen dem Informationssignal und der oberen Talbegrenzung bzw. der unteren Bergbegrenzung zu berechnen. Im Falle von übereinanderliegenden Bergen oder Tälern ist die Einrichtung 11 zum Ermitteln von Flächen- bzw. Volumeninformationen ausgebildet, um zu berücksichtigen, daß unter dem "Tal" bereits ein anderes "Tal" liegt. Als Basislinie zur Integration wird dann die obere Begrenzungslinie des darunterliegenden Tals, also beispielsweise die Linie 48 von Fig. 4 verwendet. Die Fläche AB2 berechnet sich also unter Verwendung der seitlichen Begrenzung der Fläche AB2, die durch das Informationssignal gegeben ist und unter Verwendung der Basislinie 48 und der oberen Begrenzung der Fläche AB2, die in Fig. 4 mit 49 dargestellt ist und gewissermaßen den "Wasserstand" definiert, der durch das lokale Maximum 41c festgelegt ist.

Im nachfolgenden wird auf unterschiedliche Ausgestaltungen der Einrichtung 12 zum Nachverarbeiten der Folge von Flächeninformationen bzw. Volumeninformationen eingegangen. Wie es bereits ausgeführt worden ist, eignet sich das erfindungsgemäße Konzept insbesondere zur Segmentierung von Informationssignalen auf der Basis der berechneten Volumeninformationen. In Fig. 4 sind zwei Replika A und B der Signalform dargestellt. Es ergeben sich Kombinationspaare gleicher oder geringfügig abweichender Volumina. Im nicht-invertierten Signal sind dies die Kombinationspaare (A0, B0) , (A1, B1) .

Im invertierten Signal, also hinsichtlich der Berge, ergeben sich folgende Kombinationspaare (A0', B0'), (A1', B1'), (A2', B2'), (B21', A21'), (A210', B210').

Die prozentuale Schwankung $\Delta F/F$ ist für große eingeschlossene Flächen geringer, so daß besonders bei Rauschen die Flächeninformationsvergleiche großer Flächen eine verläßlichere Schätzung auf Identität sind. Ein Beispiel hierfür ist das Kombinationspaar (A210', B210'). Die repetitiven Volumina/Flächensequenzen (A210'_n, AB2_n, B210'_n) weisen auf das Vorliegen einer bestimmten Signalform hin. Der gesamte Informationssignalverlauf wird somit auf der Basis der Folge von Flächeninformationen in m Sequenzen von Flächen- bzw. Voluminaintervallen unterteilt, woraufhin Flächen- bzw. Voluminasequenzen zu Abschnitten der gleichen Informationssignalform zusammengefaßt werden. Eine Flächen- bzw. Voluminahüllkurve wird bestimmt, indem der Aufbau der Wellensignalform sich langsam vollzieht, wobei die Flächen bzw. Volumina gleicher repetitiver Sequenzen in einer Anstiegsphase ansteigen, dann in einer Sustainphase annähernd gleich bleiben und dann in einer Abklingphase langsam abnehmen. An dieser Stelle sei darauf hingewiesen, daß typische Töne von Musikinstrumenten eine Anstiegsphase, eine Sustainphase und eine Abklingphase haben. So wäre beispielsweise bei einem Klavier, bei dem eine Saite durch den Aufschlag eines Hämmerchens angeregt wird, die Anstiegsphase relativ kurz. Die Sustainphase wäre ebenfalls relativ kurz, während die Abklingphase relativ lang dauern würde.

Eine Intervallgrenze ergibt sich dann, wenn sich Flächen bzw. Volumina abrupt ändern.

Erfindungsgemäß kann auf der Basis der Folge von Flächen- bzw. Voluminainformationen auch eine Frequenzbestimmung durchgeführt werden. Die Frequenz des Wiederholungsmusters wird bestimmt, indem die Abstände der lokalen Maxima bzw. lokalen Minima aufeinanderfolgender gleicher oder nur geringfügig unterschiedlicher Flächen bzw. Volumina in der Form beispielsweise ((A0, B0), A1, B1)) gebildet werden, und wenn im invertierten Signal die Abstände ((A0', B0'), (A1', B1'), (A2', B2'), (A21', B21'), (A210', B210') gebildet werden.

Das gewissermaßen entstehende Relief aufeinanderfolgender Bergkuppen und Talsohlen wird durch die Bestimmung des Repititionsmusters der Form (A210', AB2, B210') ermittelt. Das Feinprofil eines Bergkamms oder einer Talsohle wird durch die Angabe der strukturierenden Elemente A0, A1 und A0', A1', A2', A21' bestimmt.

Erfindungsgemäß ist die Einrichtung 12 zum Nachverarbeiten ferner ausgebildet, um jeder Flächeninformation oder Volumeninformation einen Vektor zuzuweisen, der vorzugsweise den Zahlenwert des Flächeninhalts bzw. Volumeninhalts und den Zeitwert des Auftretens umfaßt. Als Zeitwert des Auftretens kann irgend ein Zeitwert des zeitlichen Abschnitts genommen werden. Es wird bevorzugt, einem Flächeninhalt den Zeitpunkt des Auftretens des lokalen Extremwerts zuzuordnen, der dem Flächeninhalt zugeordnet ist. Bedingt ein lokaler Extremwert, wie z. B. der lokale Extremwert 45b von Fig. 4 zwei in Fig. 4 gezeigte "Berge" A1', A2', so wird den Flächeninformationen A1', A2' derselbe Zeitwert zugeordnet, nämlich der Zeitwert des Auftretens des lokalen Minimums 45b.

Damit entsteht ein Zahlenfeld von n Vektoren längs der Zeitachse. Solche Sequenzen von Vektoren können mit DNA-Sequencing-Methoden mit bestehenden Volumenvektoren, die in einer Musikdatenbank gespeichert sind, verglichen werden, um über Identifikationen, die den einzelnen Vektoren in der Musikdatenbank zugeordnet sind, beispielsweise eine Informationssignal-Identifikation durchzuführen.

Werden die Informationssignale, wie z. B. Audiosignale unterschiedlicher Aufnahmen, normiert, so können Flächen- bzw. Voluminasequenzen direkt miteinander verglichen werden. Mit einer Frequenzbestimmung können Flächen bzw. Volumina, die die gleiche Audiosignalform haben, aber durch die frequenzabhängige Zeitdehnung dennoch unterschiedliche Flächen bzw. Volumina aufweisen, miteinander in Bezug gesetzt werden.

Aus den Volumina bzw. Flächen und der Lage der Maxima bzw. Minima können erfindungsgemäß weitere Flächenformbeschreibende Parameter, wie z. B. die longitudinale Ausdehnung, durch die Einrichtung 12 zum Nachverarbeiten von Fig. 1 bestimmt werden. Solche weiteren Parameter erlauben eine Aussage, ob es sich beispielsweise um Sprachlaute oder von Musikinstrumenten evozierte Signale handelt. In dem Informationssignal selbst können vorzugsweise durch die Einrichtung 12 zum Nachverarbeiten lediglich relative Flächen bzw. Volumina verwendet werden, indem durch die Einrichtung 12 zum Nachverarbeiten das Verhältnis aufeinanderfolgender Flächen bzw. Volumina gebildet wird.

Allgemein gesagt haben Sprachlaute, Polyphonklänge oder von Musikinstrumenten evozierte Monophonklänge voneinander abweichende Audiosignalformen und sind daher anhand der Flächen- bzw. Voluminasequenzen unterscheidbar. Der frequenzabhängige Anteil einer gleichen Audiosignalform wird ebenfalls durch eine Änderung der Flächen bzw. Volumina bestimmt. Ist einem Sprachlaut (Vokal) eine insgesamte Fläche eindeutig zuordenbar, so können Vokalabschnitte aus dem Informationssignal herausgelesen werden. Ebenfalls können Konsonanten und Übergangsabschnitte durch Angabe der Flächen- bzw. Voluminasequenzen unter Verwendung der Einrichtung 12 zum Nachverarbeiten bestimmt werden. Dasselbe trifft für Polyphonklänge wie auch für Melodiefolgen zu.

Fig. 2 zeigt eine Vorrichtung gemäß einem weiteren Aspekt der vorliegenden Erfindung, die zum Aufbau einer Informationssignal-Datenbank dient. In eine Vorrichtung 20 zum Charakterisieren, die prinzipiell so aufgebaut sein kann, wie es in Fig. 1 dargestellt ist, werden aufeinanderfolgend mehrere Informationssignale unter der Steuerung einer Steuereinrichtung 21 eingespeist, um für jedes der mehreren Informationssignale einen Merkmalsvektor zu bestimmen, der von den Flächen- bzw. Voluminainformationen abgeleitet ist. Damit kann eine Informationssignaldatenbank 22 aufgebaut werden, deren Kernstück ein Speicher 23 ist, in dem die Merkmalsvektoren (MM1, MM2, MM3) der in die Einrichtung 20 eingespeisten Informationssignale jeweils in Zuordnung zu bestimmten Identifikatoren (ID1, ID2, ID3) gespeichert sind. Die Identifikatoren ID1, ID2, ID2 erlauben eine Identifikation der Informationssignale, deren Merkmalsvektoren MM1, MM2, MM3 in der Informationssignaldatenbank und insbesondere in dem Speicher 23 der Informationssignaldatenbank abgelegt sind. Eine Informationssignaldatenbank ist um so universeller, je mehr einzelne Informationssignale durch die Vorrichtung 20 zum Charakterisieren verarbeitet worden sind und in entsprechender Form, also mittels eines dieselben jeweils charakterisierenden Merkmalsvektors, im Speicher vorhanden sind.

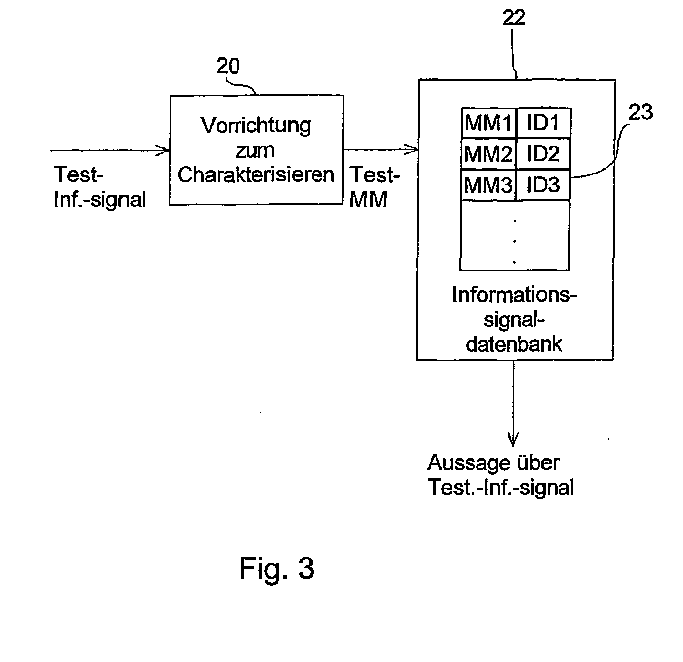

Fig. 3 zeigt eine erfindungsgemäße Vorrichtung zum Identifizieren eines Test-Informationssignals anhand einer Informationssignaldatenbank 22, die prinzipiell genauso aufgebaut sein kann, wie die anhand von Fig. 2 beschriebene Informationssignaldatenbank. Hierzu wird in die Vorrichtung 20 zum Charakterisieren ein Test-Informationssignal eingespeist, das zu identifizieren ist, bzw. von dem eine Identifikation in Hinblick auf bestimmte Merkmale desselben in qualitativer und/oder quantitativer Hinsicht erlangt werden soll. Durch die Einrichtung 20 zum Charakterisieren wird aus dem Test-Informationssignal ein Test-Merkmalsvektor ermittelt, der das Test-Informationssignal charakterisiert.

Mit diesem Test-Merkmalsvektor wird dann eine Suche in der Informationssignal-Datenbank unter den im Speicher 23 gespeicherten Merkmalsvektoren MM1, MM2, MM3 durchgeführt, um am Ausgang der Informationssignal-Datenbank eine Aussage über das Test-Informationssignal zu erhalten.

Die Aussage über das Test-Informationssignal, die durch die in Fig. 3 gezeigte Vorrichtung zum Identifizieren des Test-Informationssignals geliefert wird, kann beispielsweise eine tatsächliche Bestimmung des Autors oder Urhebers des Informationssignals sein. Eine Aussage kann jedoch auch eine quantitative Aussage sein, dahingehend, daß das Test-Informationssignal beispielsweise eine bestimmte Anzahl von Vokalen oder Konsonanten enthält. In diesem Fall wären die Merkmalsvektoren MM1, MM2, MM3, die in der Informationssignal-Datenbank gespeichert sind, Merkmalsvektoren einzelner Vokale oder Konsonanten. Nachdem der Merkmalsvektor, der durch die Vorrichtung zum Charakterisieren 20 erzeugt werden kann, ein quantitativer Merkmalsvektor ist, und nachdem in diesem Fall die in der Informationssignal-Datenbank abgespeicherten Merkmalsvektoren ebenfalls quantitative Merkmale sind, können auch quantitative Aussagen über das Test-Informationssignal getroffen werden, nämlich dahingehend, daß es einen bestimmten Ähnlichkeitsgrad zu einem Informationssignal hat, das anhand seines Merkmalsvektors in der Informationssignal-Datenbank vorliegt.

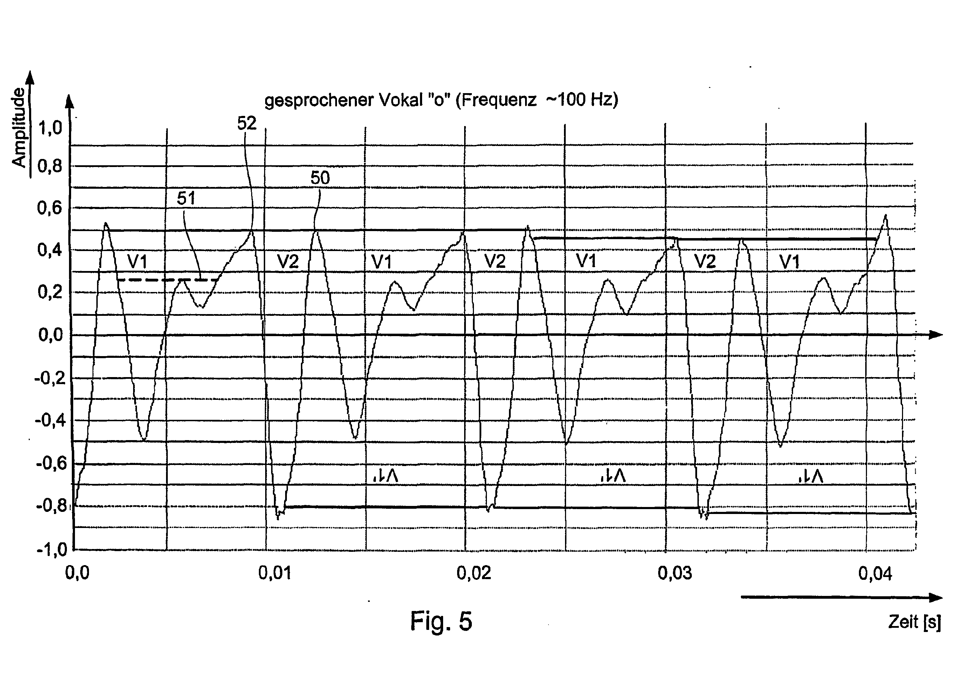

Fig. 5 zeigt ein beispielhaftes Signalformdiagramm, das sich ergibt, wenn der Vokal "o" bei einer Frequenz von etwa 100 Hz durch den Erfinder gesprochen wird. Entlang der Koordinate ist in Fig. 5 die Amplitude normiert auf Werte zwischen - 1,0 und 1,0 aufgetragen. Entlang der Abszisse ist in Fig. 5 die Zeit in Sekunden aufgetragen. Es zeigt sich, daß der Vokal "o" ein stark repetitives Signalmuster hat, das sehr ähnliche Flächen- bzw. Volumeninformationen-Sequenzen aufweist. Im einzelnen ist zu sehen, daß sich die Sequenz von Flächeninformationen V1, V2 periodisch wiederholt.

Durch Feststellen dieser Sequenz V1, V2 in der zeitlichen Folge von Volumeninformationen wird erfindungsgemäß eine Segmentierung durchgeführt, beispielsweise bei dem lokalen Maximum, das die mit V2 bezeichneten Flächeninformationen bestimmt und in Fig. 5 mit 50 bezeichnet ist.

Alternativ könnte eine Segmentierung auch bei einem lokalen Minimum, wie z. B. dem Maximum 50 lokalbenachbarten Minimum oder dem wieder nach links benachbarten lokalen Maximum vorgenommen werden, das das Tal identifiziert, das mit V1 bezeichnet ist.

Anhand der Fig. 5 ist ferner zu sehen, daß die Flächeninformationen V1 das gesamte linke Tal der Signalform umfassen. Das durch V1 identifizierte Tal umfaßt somit die Flächeninformationen der beiden Täler unterhalb der gestrichelten Linie 51 sowie die Flächeninformationen zwischen der Linie 51 und der oberen Begrenzungslinie, die durch ein lokales Maximum 52 definiert ist. Aus Fig. 5 ist ersichtlich, daß entweder Sequenzen von einzelnen Flächeninformationen von Tälern oder Bergen verwendet werden können, oder daß zur Segmentierung auf der Basis von auftretenden Flächeninformationssequenzen auch "kombinierte" Täler/Berge genommen werden können, wie z. B. das durch V1 identifizierte Tal.

Bei einem weiteren bevorzugten Ausführungsbeispiel der vorliegenden Erfindung wird neben den Flächen/ Volumeninformationen auch die Höheninformation berücksichtigt. Dieses Konzept hat wiederum sein Analogon in der Geodäsie, wenn nämlich nicht nur die Wassermenge in einem Tal berücksichtigt wird, sondern die potentielle Energie dieser Wassermengen in dem Tal. Damit ist eine Hyperfeinstruktur des Signals angebbar, indem zusätzlich der Energieterm der potentiellen Energie angegeben wird. Die potentielle Energie ist gleich dem Produkt aus Dichte, Volumen, Beschleunigung und Höhe. Ferner kann eine gewissermaßen kompressionslose Flüssigkeit angenommen werden. Darüber hinaus werden die Dichte und die Beschleunigung konstant angenommen und so eingestellt, daß sich die Lageenergie eines "Wasserspeichers" aus dem integralen Produkt aus eingeschlossenen Volumen und Höhe errechnet. Die Energie des in dem mit V1 bezeichneten Tal in Fig. 5 kann durch Zerlegen des Tals in kleine Rechtecke berechnet werden, wobei die Fläche jedes Rechtecks vor der Aufsummation mit der Höhe dieses Rechtecks, also der Amplitude, die diesem Rechteck zugeordnet ist, multipliziert wird.

Damit werden höher gelegene Volumina stärker gewichtet, während Rauschen um die Nullinie weniger stark gewichtet wird. Die Gewichtung höher gelegenen Flächeninformationen durch Miteinbeziehung der entsprechenden Höhe entspricht dem üblichen Wesen von Musiksignalen, bei denen laute Signalanteile die Tendenz besitzen, höher informationstragend zu sein als leise Signalanteile.

Ein Signal mit stärkerer Amplitude trägt somit mehr Informationen als ein Signal mit schwächerer Amplitude. Diesem Aspekt wird durch die Gewichtung der Folge von Flächeninformationen mit entsprechenden Höheninformationen, um gewissermaßen die potentielle Energie eines in einem Tal befindlichen Wassers zu erhalten, Genüge getan.

Im nachfolgenden wird ferner auf ein bevorzugtes Ausführungsbeispiel beispielsweise zum Berechnen der Fläche A1 von Fig. 4 eingegangen. Vorzugsweise wird die Fläche A1 derart berechnet, daß zumindest die Fläche des Rechtecks berechnet wird, das sich durch die obere Begrenzungslinie 42, eine untere Begrenzungslinie, die durch das lokale Minimum 45b geht, sowie die beiden in Fig. 4 eingezeichneten gestrichelten Seitenlinien ergibt. Daraufhin wird eine normale Integration des Signals vom lokalen Maximum 41b bis zum Punkt 44 durchgeführt, wobei als Nullinie der Funktion die Linie genommen wird, die durch das lokale Minimum 45b verläuft. Die dadurch erhaltene Fläche wird dann von der ursprünglich berechneten Rechtecksfläche subtrahiert, um schließlich die Fläche A1 des Tals zu erhalten, das durch das lokale Maximum 41b definiert ist.

Es sei darauf hingewiesen, daß zur Berechnung der Flächen der Berge nicht eine erneute Integration über das Informationssignal durchgeführt werden muß, sondern daß eine einmalige Integration ausreichend ist, um dann anhand des Kurvenintegrals und verschiedener Rechtecke sämtliche Flächeninformationen der Täler bzw. Berge zusammenzustellen.

Wie es bereits ausgeführt worden ist, ist der Vokal "o" in Fig. 5 etwa bei 100 Hz gesprochen worden. Würde der Vokal bei einer höheren Frequenz gesprochen werden, so würde sich ein zwar ähnliches Zeitdiagramm ergeben, das jedoch hinsichtlich der Zeitachse gestaucht ist. Würde der Vokal dagegen mit einer niedrigeren Frequenz aus 100 Hz gesprochen werden, so würde sich ein prinzipiell zu Figur 5 ähnliches Zeitdiagramm ergeben, das jedoch um einen entsprechenden Faktor, der von der Frequenzdifferenz abhängt, gedehnt ist.

Zur Frequenz-Amplitudennormierung wird daher erfindungsgemäß ein bei einer Normfrequenz, wie z. B. 100 Hz, gesprochener Vokal in der Informationssignaldatenbank 22 von Fig. 3 anhand seines Merkmalsvektors und seiner Identifikation abgelegt. Ein Testsignal, von dem nicht bekannt ist, bei welcher Frequenz es gesprochen worden ist, wird dann innerhalb der Informationssignaldatenbank hinsichtlich seines Test-Merkmalsvektors (Fig. 3) einem Sweep über der Frequenz unterzogen. Dies bedeutet, daß der Signalverlauf des Testsignals, der Signalverlauf des in der Informationssignaldatenbank abgespeicherten Signals oder beide Signale oder Merkmalsvektoren entsprechend gestaucht bzw. gedehnt werden, um bei jedem Stauchungsfaktor z. B. anhand der Methode der kleinsten Fehlerquadrate eine Übereinstimmung festzustellen. Damit kann ermittelt werden, ob überhaupt zu irgendeinem Zeitpunkt des Frequenz-Sweeps eine ausreichend gute Übereinstimmung stattgefunden hat. Wird dies verneint, so umfaßt das Test-Informationssignal beispielsweise keinen gesprochenen Vokal "o". Wird dagegen bei einer bestimmten Einstellung im Frequenz-Sweep eine ausreichend gute Übereinstimmung festgestellt, so kann davon ausgegangen werden, daß im Test-Informationssignal ein gesprochener Vokal "o" vorliegt, und daß dieser gesprochene Vokal bei einer bestimmten Frequenz gesprochen worden ist.

Es sei darauf hingewiesen, daß sich durch die Dehnung/Stauchung des Merkmalsvektors oder, wenn die Dehnung/Stauchung vor der Extraktion des Merkmalsvektors durchgeführt wird, zwar die absoluten Flächeninformationen verändern. Gleich bleiben jedoch die Relationen der Flächen/Volumeninformationen zueinander, so daß eine Dehnung/Stauchung an der Zeitachse keine Auswirkung auf Sequenzen von Flächeninformationen dahingehend hat, daß diese nicht mehr identifiziert werden könnten.

Eine analoge Vorgehensweise wird im Hinblick auf eine Amplitudennormierung erfindungsgemäß eingesetzt. Wird der gesprochene Vokal "o" von Fig. 5 mit einer bestimmten mittleren Lautstärke in der Informationssignaldatenbank 22 von Fig. 3 abgespeichert, so kann eine Dehnung/Stauchung (Verstärkung/Dämpfung) entlang der Amplituden-Achse mit darauffolgender Fehlerquadratmethode durchgeführt werden, um erstens festzustellen, ob der Vokal überhaupt in einem Test-Informationssignal vorhanden ist, und um zweitens festzustellen, mit welcher Lautstärke der Vokal im Test-Informationssignal aufgetreten ist. Bestimmte Suchstrategien zur einzelnen oder kombinierten Veränderung, d.h. Dehnung/Stauchung entlang der Zeitachse und der Amplitudenachse, wird auf den Stand der Technik im Hinblick auf DNA-Sequencing-Konzepte oder auf Methoden der kleinsten Fehlerquadrate verwiesen, um beispielsweise die minimale Metrik bzw. den nächsten Nachbar ("Next Neighbor") zu bestimmen.

Alternativ kann zur Frequenz/Amplituden-Kalibrierung eine Informationssignaldatenbank 22 geschaffen werden, bei der die einzelnen Merkmalsvektoren mit bestimmten Lautstärke/Frequenz-Einstellungen eines Meßsystems aufgezeichnet worden sind. Sofern ein Zugriff hierauf besteht, können dieselben Einstellungen z. B. hinsichtlich der Lautstärke, von dem Test-Informationssignal gefordert werden. Hierauf kann eine Kennlinie abgeleitet werden, um Flächen/Volumeninformationen eines beispielsweise bei 140 Hz gesprochenen Vokals "o" in Flächen/Volumeninformationen bei der vorbestimmten Aufnahmeeinstellung, wie z. B. einer Frequenz von 100 Hz, umzurechnen bzw. abzubilden.

Schließlich wird darauf hingewiesen, daß stark signifikante Merkmale eines Audiosignals als Beispiel für ein Informationssignal in großen Volumen/Flächeninformationen liegen. Solche großen Volumen/Flächeninformationen ergeben sich durch Summation der Flächeninformationen AB1, AB2, B0 von Fig. 4. Das gesamte Tal, das durch AB2, AB1, B0 definiert ist, erhält seine Höhenbegrenzung 49 aufgrund des lokalen Maximums 41c. Durch Aufaddition der Täler, die durch lokale Maxima mit kleinerer Amplitude definiert sind, wie z. B. des lokalen Maximums 41d, wird die gesamte Fläche des durch die Begrenzungslinie 49 nach oben begrenzten Tals erhalten. Entsprechend wird für die Täler des invertierten Signals, d.h. die Berge des nicht-invertierten Signals vorgegangen. Der Berg, der insgesamt das erste Segment A identifiziert, ergibt sich aus den Flächeninformationen A210', A0', A21', A1', A2'. Durch Ermitteln der Flächeninformationen eines gesamten Bergs oder eines gesamten Tals kann erfindungsgemäß eine Segmentierung mit verläßlichen Ergebnissen durchgeführt werden, da solche großen Flächeninformationen für Berge oder Täler für die Grobstruktur, d.h. für die repetitive Struktur des Informationssignals, charakteristisch sind.

Als weiteres Merkmal oder Feature wird es bevorzugt, die Flächen/Volumeninformationen einer einzelnen Sequenz V1, V2 von Fig. 5 zu addieren, um eine Gesamtfläche der Sequenz zu erhalten, mit der eine Suche in einer Datenbank unternommen werden kann, in der Gesamtflächen von bekannten Sequenzen gespeichert sind. Das Feature der Gesamtfläche ist zwar für ein Signal weniger charakteristisch, ist dafür jedoch stärker komprimiert, so daß eine kleinere Musikdatenbank und eine schnellere Suche möglich sind. Dieses Feature ist dann ausreichend, wenn es noch ausreichend charakteristisch ist. An diesem Beispiel zeigt sich die einfach erreichbare Skalierbarkeit zwischen dem Merkmale der Charakterisierung und dem Speicherplatzmerkmal des erfindungsgemäßen Konzepts.

Alternativ oder zusätzlich zu der Gesamtfläche könnte auch die Gesamtenergie einer Sequenz V1, V2 von Fig. 5 eingesetzt werden. Für das Energiefeature gelten die vorstehenden Ausführungen ebenso.

Die erfindungsgemäßen Vorrichtungen und Verfahren können vorteilhafterweise um eine Normierung ergänzt werden. Die Normierung ist insbesondere günstig, wenn ein Signal einer Merkmals-Extraktionsprozedur gemäß der vorliegenden Erfindung unterzogen wird, um als Merkmal z. B. eine Folge von Volumeninformationen bzw. Flächeninformationen zu erhalten, wobei diese Folge, wenn sie eine wiederkehrende Sequenz in einem Signal ist, wie sie durch vorstehend beschriebene Segmentierungsalgorithmen erhalten werden kann, als Urvektor bezeichnet wird. Wenn z. B. ausgegangen wird, daß ein Urvektor eines Signals in einer Datenbank zu Vergleichszwecken abgespeichert ist, so wurde zur Gewinnung dieses Urvektors ein bestimmter Pegel bzw. eine bestimmte Lautstärke des Musiksignals verwendet, um den Urvektor zu generieren. Ein Vergleich eines Urvektor, der aus einem Testsignal abgeleitet worden ist, mit dem in der Datenbank gespeicherten Urvektor ist dann ohne weiteres möglich, wenn das Testsignal mit den selben Amplitudenverhältnissen vorliegt, wie das Vergleichssignal, von dem der in der Datenbank gespeicherte Urvektor abgeleitet worden ist. In anderen Worten ausgedrückt bedeutet dies, daß ein Urvektor-Vergleich ohne weiteres möglich ist, wenn die beiden Signale identische Signalverläufe A(t) haben.

Problematisch wird dies jedoch, wenn das Testsignal, dessen Urvektor mit einem in der Datenbank gespeicherten Urvektor verglichen werden soll, lauter abgespielt wird oder leiser abgespielt wird. Mathematisch ausgedrückt bedeutet dies, daß das Signal A(t), das dem Urvektor in der Datenbank zugrunde liegt, nicht gleich dem Testsignal ist, sondern daß das Testsignal ein c-faches des Signals ist, also mit c·A(t) beschrieben werden kann, wobei c größer oder kleiner 1 ist. Ist c größer als 1, so ist das Testsignal lauter als das Datenbanksignal, von dem der Urvektor in der Datenbank gespeichert ist. Ist der Faktor c kleiner als 1 und selbstverständlich ungleich Null, so ist das Testsignal leiser als das Datenbanksignal.

Erfindungsgemäß wird daher, um einen Datenbank-Vergleich nicht an Lautstärkeunterschieden scheitern zu lassen bzw. zu erschweren, eine Normierung des Testsignals und vorzugsweise auch des Datenbanksignals hinsichtlich des Urvektors vorgenommen.

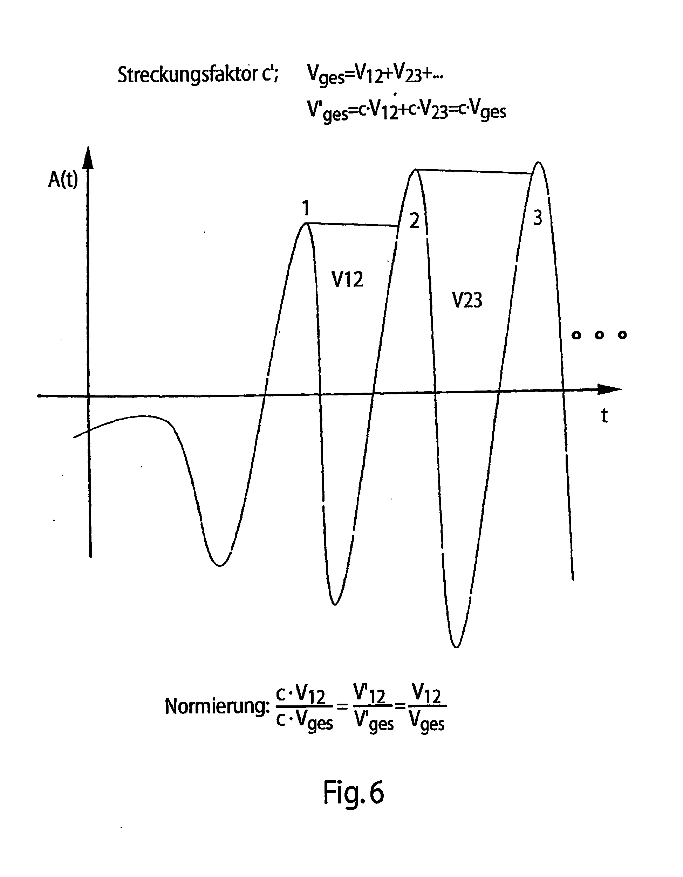

In Figur 6 ist ein beispelhafter Signalverlauf A(t) gezeigt. Ein nicht-normierter Urvektor würde die Voluminafolgen bzw. Flächenfolgen V12, V23, ..., VI-1, I umfassen. Der Urvektor wäre dann ein Vektor, der eine Voluminafolge umfaßt sie vorzugsweise ein Segment ist, die jedoch auch ein Teil eines Segments sein könnte.

Wie es ausgeführt worden ist, ist bei einer Streckung des Testsignals um einen Faktor c ein Vergleich mit einem entsprechenden Urvektor, der von einem Datenbanksignal abgeleitet worden ist, problematisch.

Es wird daher eine Normierung aller Komponenten des Urvektors vorgenommen, und zwar eine Normierung mit einem Normierungswert, der gleich dem Gesamtvolumen aller Einzelvolumina einer Folge von Volumina entspricht. Das Gesamtvolumen einer Folge bzw. eines Urvektors berechnet sich durch Addition aller Einzelvolumen in dem Urvektor. Für das nicht-gestreckte Signal erhält man

$$Vges = V12 + V23 + V34 + ... + Vn-1,n.$$

Das Gesamtvolumen eines mit dem Streckungsfaktor c beaufschlagten gestreckten Signals A'(t)=c·A(t) berechnet sich folgendermaßen:

$$V'ges = c·V12 + c·V23 + ... + c·Vn-1,n.$$

Aus dem Vergleich des Gesamtvolumens für das gestreckte Signal Vges mit dem Gesamtvolumen des nicht-gestreckten Signal Vges ist zu sehen, daß diese über den Streckungsfaktor c multiplikativ zusammenhängen. Erfindungsgemäß wird daher eine Normierung jeder einzelnen Komponente Vi-1, i einer Folge von Volumina bzw. Flächen durch das Gesamtvolumen bzw. die Gesamtfläche der Folge vorgenommen.

Aus dem gleichungsmäßigen Zusammenhang unterhalb des Diagramms in Figur 6 ist zu sehen, daß sich durch diese Normierung der Streckungsfaktor c herauskürzt, so daß ein normierter Urvektor eine hinsichtlich der Lautstärke des Signals invariante Größe ist. In dieser Hinsicht wird es bevorzugt, sowohl den Urvektor, der in der Datenbank gespeichert ist, zu normieren als auch den Urvektor des Testsignals zu normieren. In diesem Fall sind beide Urvektoren gegenüber jeglichen Amplitudenunterschieden, die durch eine multiplikative Streckung mit einem Faktor c beschrieben werden kann, invariant, so daß Lautstärkeunterschiede zwischen einem Testsignal und einem Datenbanksignal unerheblich sind und eine Musikerkennung nicht beeinträchtigen.

An dieser Stelle sei darauf hingewiesen, daß ein Urvektor nicht unbedingt jedes aufeinanderfolgende Volumen in einer Sequenz, die segmentiert worden ist, umfassen muss. Je nach Anwendung genügt es auch, z. B. nur jedes zweite bzw. jedes dritte Volumen einer Sequenz abzuspeichern, um den Speicherbedarf für die Urvektoren bzw. normierten Urvektoren zu verringern. In diesem Fall leidet jedoch auch die Aussagefähigkeit, so daß hier ein Kompromiß zu finden sein wird. Sollte eine solcher "lückenhafter" Urvektor verwendet werden, so wird dieser genauso normiert durch das Gesamtvolumen des lückenhaften Urvektors bzw. die Gesamtfläche des lückenhaften Urvektors. Es ist jedoch lediglich wichtig, daß der in der Datenbank gespeicherte Urvektor, mit dem ein Test-Urvektor verglichen werden soll, die selbe "Lückenhaftigkeit" hat.

Die erfindungsgemäßen Verfahren, zum Charakterisieren, zum Aufbauen einer Informationssignal-Datenbank oder zum Identifizieren eines Test-Informationssignal anhand einer Informationssignal-Datenbank können je nach vorliegendem Bedarf in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, daß das entsprechende Verfahren ausgeführt wird. Allgemein besteht die Erfindung somit auch in einem Computer-Programm-Produkt mit auf einem maschinenlesbaren Träger gespeicherten Programmcode zur Durchführung eines oder mehrerer der erfindungsgemäßen Verfahren, wenn das Computer-Programm-Produkt auf einem Rechner abläuft. In anderen Worten ausgedrückt ist die Erfindung somit ein Computer-Programm mit einem Programmcode zur Durchführung des Verfahrens, wenn das Computer-Programm auf einem Computer abläuft.

**Patentansprüche**

1. Vorrichtung zum Aufbauen einer Audiosignal-oder visuellen Signal Datenbank (22), mit folgenden Merkmalen:

   einer Vorrichtung (20) zum Charakterisieren eines Audiosignals oder visuellen Signals, das einen Amplituden-Zeit-Verlauf mit lokalen Extremwerten aufweist, um Flächeninformationen für ein Audiosignal oder visuelles Signal zu erhalten, wobei die vorrichtung zum charakterisieren folgende Merkmale aufweist:
   einer Einrichtung (10) zum Bestimmen der lokalen Extremwerte des Audiosignals oder visuellen Signals wobei jeder lokale Extremwert zumindest teilweise durch einen jeweiligen Zeitpunkt und eine Amplitude definiert ist; und
   einer Einrichtung (11) zum Ermitteln von Flächeninformationen von Tälern oder Bergen des Audiosignals oder visuellen Signals im Falle einer eindimensionalen Amplitude des Audiosignals oder visuellen Signals oder von Volumeninformationen von Tälern oder Bergen des Audiosignals oder visuellen Signals im Falle einer zweidimensionalen Amplitude des Audiosignals oder visuellen Signals , wobei jedes Tal oder jeder Berg zumindest teilweise durch einen zeitlichen Abschnitt (42, 47) des Audiosignals oder visuellen Signals definiert ist, wobei sich der zeitliche Abschnitt des Audiosignals oder visuellen Signals von dem Zeitpunkt eines lokalen Extremwerts (43) bis zu einem zeitlich benachbarten Wert (44) des Audiosignals oder visuellen Signals , der die gleiche Amplitude wie der entsprechende lokale Extremwert aufweist, erstreckt, wobei die Flächeninformationen oder Volumeninformationen von mehreren Bergen oder Tälern für das Audiosignal oder visuelle Signal charakteristisch sind.
   emer Einrichtung (21) zum Zuführen mehrerer Audiosignale oder visuellen Signale zu der Vorrichtung (20) zum Charakterisieren, um für jedes Audiosignale oder visuelle Signal einen Merkmalsvektor (MM1, MM2, MM3) zu erhalten, der von den Flächeninformationen für das Audiosignale oder visuellen Signal abgeleitet ist; und
   einer Einrichtung (23) zum Speichern von Merkmalsvektoren (MM1, MM2, MM3) für die Audiosignale oder visuellen Signale wobei jedem Merkmalsvektor ein Identifikator (ID1, ID2, ID3) des Audiosignale oder visuellen Signals zugeordnet ist, aus dem der jeweilige Merkmalsvektor ermittelt worden ist.

2. Vorrichtung zum Identifizieren eines Audiosignals oder visuellen Signals unter Verwendung einer Audiosignal oder visuellen Signal-Datenbank (22), die Merkmalsvektoren (MM1, MM2, MM3) in Zuordnung zu jeweiligen Audiosignal-oder visuellen Signal-Identifikatoren (ID1, ID2, ID3) speichert, mit folgenden Merkmalen:

   einer Vorrichtung zum Aufbauen einer Audiosignal- oder visuellen Signal-Datenbank (22), gemäß Anspruch 1; und
   einer Einrichtung zum Vergleichen eines Merkmalsvektors, der von den Flächeninformationen oder Volumeninformationen abgeleitet ist, die für ein Test-Audiosignal oder visuelles Testsignal charakteristisch sind, mit in der Audiosignal- oder visuellen Signal-Datenbank (22) gespeicherten Merkmalsvektoren, um eine Aussage über das Audiosignal- oder visuellen Signal zu treffen.

3. Vorrichtung nach Anspruch 1 oder Anspruch 2,
   bei der die Einrichtung (10) zum Bestimmen ausgebildet ist, um lokale Maxima des Audiosignals oder visuellen Signals zu bestimmen, und
   bei der die Einrichtung (11) zum Ermitteln von Flächeninformationen ausgebildet ist, um Flächeninformationen von Tälern des Audiosignals oder visuellen Signals zu ermitteln, wobei ein Tal durch einen zeitlichen Abschnitt des Audiosignals oder visuellen Signals definiert ist, der sich von dem Zeitpunkt des lokalen Maximums bis zu einem zeitlich benachbarten Wert des Audiosignals oder visuellen Signals erstreckt, der die gleiche Amplitude wie das lokale Maximum hat.

4. Vorrichtung nach Anspruch 3,
   bei der die Einrichtung (11) zum Ermitteln von Flächeninformationen ausgebildet ist, um Flächeninformationen über ein Tal (AB2) des Audiosignals oder visuellen Signals, das einem lokalen Maximum (41c) zugeordnet ist, das über einem Tal (AB1) des Audiosignals oder visuellen Signals vorhanden ist, dem ein weiteres lokales Maximum (41d) mit kleinerer Amplitude als das eine lokale Maximum zugeordnet ist, so zu bestimmen, daß die Flächeninformationen des einen Tals (AB2) zusammen mit den Flächeninformationen des anderen Tals (AB1) auf eine geometrische Fläche zwischen dem Audiosignal oder visuellen Signal und einer oberen Begrenzungslinie des einen Tals (AB2) hinweisen.

**5.** Vorrichtung nach einem der vorhergehenden Ansprüche,
bei der die Einrichtung (10) zum Bestimmen ausgebildet ist, um lokale Minima des Audiosignals oder visuellen Signals zu bestimmen, und
bei der die Einrichtung (11) zum Ermitteln von Flächeninfonnationen ausgebildet ist, um Flächeninformationen von Bergen des Audiosignals oder visuellen Signals zu ermitteln, wobei ein Berg zumindest teilweise durch einen zeitlichen Abschnitt des Audiosignals oder visuellen Signals definiert ist, der sich von dem Zeitpunkt des lokalen Minimums bis zu einem zeitlich benachbarten Wert des Audiosignals oder visuellen Signals erstreckt, der die gleiche Amplitude wie das lokale Minimum hat.

**6.** Vorrichtung nach Anspruch 5,
bei der die Einrichtung (11) zum Ermitteln von Flächeninformationen ausgebildet ist, um Flächeninformationen über einen Berg (A1') des Audiosignals oder visuellen Signals, der einem ersten Minimum (45b) zugeordnet ist, der über einem Berg (A21') des Audiosignals oder visuellen Signals vorhanden ist, dem ein zweites Minimum (45a) mit kleinerer Amplitude als das erste Minimum (45b) zugeordnet ist, so zu bestimmen, daß die Flächeninformationen des ersten Bergs zusammen mit den Flächeninformationen des zweiten Bergs auf eine geometrische Fläche zwischen dem Audiosignal oder visuellen Signal und einer unteren Begrenzungslinie des ersten Bergs (A21') hinweisen.

**7.** Vorrichtung nach einem der vorhergehenden Ansprüche,
bei der die Einrichtung zum Ermitteln ausgebildet ist, um als Flächeninformationen die geometrische Fläche eines Tals oder Bergs, das bzw. der einem lokalen Extremwert zugeordnet ist, zu berechnen.

**8.** Vorrichtung nach einem der vorhergehenden Ansprüche,
bei der die Einrichtung (11) zum Ermitteln ausgebildet ist, um den Flächeninformationen für ein Tal oder einen Berg einen Zeitwert zuzuweisen, der dem zeitlichen Abschnitt, wodurch den das Tal oder der Berg definiert ist, entnommen ist, durch eine Folge von Flächeninformationen-Zeitwert-Tupeln entsteht.

**9.** Vorrichtung nach Anspruch 8,
bei der der Zeitwert der Zeitpunkt des lokalen Extremswerts ist, der dem Tal oder dem Berg zugeordnet ist.

**10.** Vorrichtung nach einem der vorhergehenden Ansprüche,
bei der die Einrichtung (11) zum Ermitteln ausgebildet ist, um als Flächeninformationen quantitative Werte zu ermitteln.

**11.** Vorrichtung nach Anspruch 10,
die ferner folgendes Merkmal aufweist:

eine Einrichtung (12) zum Nachverarbeiten der Flächeninformationen, die mehreren Bergen oder Tälern entsprechen.

**12.** Vorrichtung nach Anspruch 11,
bei der die Einrichtung (12) zum Nachverarbeiten ausgebildet ist, um Berge oder Täler, deren Flächeninformationen kleiner als ein vorbestimmter Schwellenwert sind, bei einer weiteren Verarbeitung zu unterdrücken.

**13.** Vorrichtung nach Anspruch 11 oder 12,
bei der die Einrichtung (12) zum Nachverarbeiten ausgebildet ist, um eine Folge von Flächeninformationsveränderungen durch Bestimmen eines Verhältnisses von jeweils zeitlich aufeinanderfolgenden Flächeninformationen oder durch Bilden einer Differenz zwischen zwei jeweils aufeinanderfolgenden Flächeninformationen zu ermitteln.

**14.** Vorrichtung nach Anspruch 11, 12 oder 13,
bei der die Einrichtung (12) zum Nachverarbeiten ausgebildet ist, um die Folge von Flächeninformationen nach sich wiederholenden Sequenzen von Flächeninformationen zu untersuchen.

**15.** Vorrichtung nach Anspruch 14,
bei der die Einrichtung (12) zum Nachverarbeiten ausgebildet ist, um das Audiosignal oder visuellen Signal gemäß sich wiederholenden Sequenzen zu segmentieren.

**16.** Vorrichtung nach einem der Ansprüche 11 bis 15,
bei der die Einrichtung (12) zum Nachverarbeiten ausgebildet ist, um Kombinationspaare von identischen Flächeninformationen oder von Flächeninformationen die sich weniger als eine vorbestimmte Toleranz unterscheiden, zu bestimmen, und um anhand einer Zeitdifferenz zwischen Zeitpunkten der Flächeninformationen eines Kombinationspaars eine Frequenzinformation über das Audiosignals oder visuellen Signals zu berechnen.

**17.** Vorrichtung nach einem der Ansprüche 11 bis 13,
bei der die Einrichtung (12) zum Nachverarbeiten ausgebildet ist, um abrupte Flächeninformationsänderungen in der Folge von Flächeninformationen zu bestimmen, und um bei abrupten Flächeninformationsänderungen das Audiosignals oder visuellen Signals zu segmentieren.

**18.** Vorrichtung nach einem der Ansprüche 11 bis 17,
bei der die Einrichtung (12) zum Nachverarbeiten ausgebildet ist, um Flächeninformationen zu normieren, um eine Folge von normierten Flächeninformationen zu erhalten.

**19.** Vorrichtung nach einem der Ansprüche 11 bis 18,
bei der die Einrichtung (12) zum Nachverarbeiten ausgebildet ist, um unter Verwendung der Flächeninformationen und von zugeordneten Zeitpunkten eine longitudinale Ausdehnung von Bergen oder Tälern zu erhalten, um bestimmen zu können, ob es sich bei dem Audiosignal oder visuellern Signal um ein Audiosignal mit einer Sprache oder einer Instrumentenmusik handelt.

**20.** Vorrichtung nach einem der vorhergehenden Ansprüche,
bei der Einrichtung (11) zum Ermitteln ausgebildet ist, um eine Folge von Flächeninformationen oder Volumeninformationen zu ermitteln,
wobei die Vorrichtung ferner eine Normierungseinrichtung aufweist, die ausgebildet ist, um durch Addition von zumindest zwei Elementen der Folge von Flächeninformationen oder Volumeninformationen eine Gesamtfläche oder ein Gesamtvolumen zu berechnen, und die ferner ausgebildet ist, um die Elemente der Folge durch die Gesamtfläche oder das Gesamtvolumen zu dividieren, um eine normierte Folge zu erhalten.

**21.** Vorrichtung nach Anspruch 20,
bei der die Normierungseinrichtung ausgebildet ist, um alle Elemente eines Segments der Folge aufzusummieren, wobei ein Segment ein Urmuster darstellt, das sich in einer unsegmentierten Folge wiederholt.
Bestimmen (10) der lokalen Extremwerte des Audiosignals oder visuellen Signals, wobei ein lokaler Extremwert durch einen Zeitpunkt und eine Amplitude definiert ist; und
Ermitteln (11) von Flächeninformationen von Tälern oder Bergen des Audiosignals oder visuellen Signals im Falle einer eindimensionalen Amplitude des Audiosignals oder visuellen Signals oder von Volumeninformationen von Tälern oder Bergen des Audiosignals oder visuellen Signals im Falle einer zweidimensionalen Amplitude des Audiosignals oder visuellen Signals wobei ein Tal oder Berg durch einen zeitlichen Abschnitt (42, 47 des Audiosignals oder visuellen Signals definiert ist, wobei sich der Abschnitt des Audiosignals oder visuellen Signals von dem Zeitpunkt eines lokalen Extremwerts (43) bis zu einem zeitlich benachbarten Wert (44) des Audiosignals oder visuellen Signals der die gleiche Amplitude wie der lokale Extremwert aufweist, erstreckt, wobei die Flächeninformationen oder Volumen-informationen von mehreren Bergen oder Tälern für das Audiosignal oder visuelle Signal charakteristisch sind;}

**22.** Verfahren zum Aufbauen einer Audiosignal- oder visuellen Signal-Datenbank (22), mit folgenden Schritten:

Charakterisieren (20) eines Audiosignals oder visuellen Signals, das einen Amplituden-Zeit-Verlauf mit :lokalen Extremwerten aufweist, um Flächeninformationen für ein Audiosignal oder visuelles Signal zu erhalten, umfassend:
Zuführen (21) mehrerer Audiosignale oder visuellen Signale zum Charakterisieren (20), um für jedes Audiosignale oder visuelle Signal einen Merkmalsvektor (MM1, MM2, MM3) zu erhalten, der von den Flächeninformationen für das Audiosignale oder visuellen Signal abgeleitet ist; und
Speichern (23) von Merkmalsvektoren (MM1, MM2, MM3) für die Audiosignale oder visuellen Signale, wobei jedem Merkmalsvektor ein Identifikator (ID1, ID2, ID3) des Audiosignals oder visuellen Signals zugeordnet ist, aus dem der jeweilige Merkmalsvektor ermittelt worden ist.

23. Verfahren zum Identifizieren eines Audiosignals oder visuellen Signals unter Verwendung einer Audiosignal- oder visuellen Signal-Datenbank (22), die Merkmalsvektoren (MM1, MM2, MM3) in Zuordnung zu jeweiligen Audiosignal- oder visuellen Signalidentifikatoren (ID1, ID2, ID3) speichert, mit folgenden Schritten:

Aufbauen einer Audiosignal- oder visuellen Signal-Datenbank (22), gemäß Anspruch 22; und
Vergleichen eines Merkmalsvektors, der von den Flächeninformationen oder Volumeninformationen abgeleitet ist, die für ein Test-Audiosignal oder visuelles Testsignal charakteristisch sind, mit in der Audiosignal- oder visuellen Signal-Datenbank (22) gespeicherten Merkmalsvektoren, um eine Aussage über das Audiosignal- oder visuellen Signal zu treffen.

24. Computer-Programm mit einem Programmcode zum Durchführen eines Verfahrens nach jedem der Ansprüche 22 oder 23, wenn das Programm auf einem Computer abläuft.

**Claims**

1. Apparatus for setting up an audio signal or visual signal database (22), having the following features;
an apparatus (20) for characterizing an audio signal or visual signal having an amplitude/time profile with local extreme values in order to obtain items of area information for an audio signal or visual signal, the characterizing apparatus having the following features:

a device (10) for determining the local extreme values of the audio signal or visual signal, each local extreme value being at least partially defined by a respective time and an amplitude; and
a device (11) for ascertaining items of area information relating to troughs or peaks of the audio signal or visual signal in the case of a one-dimensional amplitude of the audio signal or visual signal or items of volume information relating to troughs or peaks of the audio signal or visual signal in the case of a two-dimensional amplitude of the audio signal or visual signal, each trough or each peak being at least partially defined by a temporal section (42, 47) of the audio signal or visual signal, the temporal section of the audio signal or visual signal extending from the time of a local extreme value (43) to a temporally adjacent value (44) of the audio signal or visual signal which has the same amplitude as the corresponding local extreme value, the items of area information or volume information relating to a plurality of peaks or troughs being characteristic of the audio signal or visual signal;
a device (21) for supplying a plurality of audio signals or visual signals to the characterizing apparatus (20) in order to obtain a feature vector (MM1, MM2, MM3) for each audio signal or visual signal, which feature vector has been derived from the items of area information for the audio signal or visual signal; and
a device (23) for storing feature vectors (MM1, MM2, MM3) for the audio signals or visual signals, each feature vector being assigned an identifier (ID1, ID2, ID3) of the audio signal or visual signal, from which identifier the respective feature vector has been determined.

2. Apparatus for identifying an audio signal or visual signal using an audio signal or visual signal database (22) which stores feature vectors (MM1, MM2, MM3) in a manner assigned to respective audio signal or visual signal identifiers (ID1, ID2, ID3), having the following features:

an apparatus for setting up an audio signal or visual signal database (22) according to Claim 1; and
a device for comparing a feature vector, which has been derived from the items of area information or volume information characteristic of a test audio signal or visual test signal, with feature vectors stored in the audio signal or visual signal database (22) in order to make a statement on the audio signal or visual signal.

3. Apparatus according to Claim 1 or Claim 2,
in which the determining device (10) is designed to determine local maxima of the audio signal or visual signal, and
in which the device (11) for ascertaining items of area information is designed to ascertain items of area information relating to troughs of the audio signal or visual signal, a trough being defined by a temporal section of the audio signal or visual signal, which section extends from the time of the local maximum to a temporally adjacent value of the audio signal or visual signal which has the same amplitude as the local maximum.

4. Apparatus according to Claim 3,
in which the device (11) for ascertaining items of area information is designed to determine items of area of information relating to a trough (AB2) of the audio signal or visual signal, which is assigned to a local maximum (41c) and is above a trough (AB1) of the audio signal or visual signal that is assigned to a further local maximum (41d) with a smaller amplitude than the one local maximum, in such a manner that the items of area information relating to one trough (AB2), together with the items of area information relating to the other trough (AB1), indicate a geometrical area between the audio signal or visual signal and an upper boundary line of the one trough (AB2).

5. Apparatus according to one of the preceding claims,
in which the determining device (10) is designed to determine local minima of the audio signal or visual signal, and in which the device (11) for ascertaining items of area information is designed to ascertain items of area information relating to peaks of the audio signal or visual signal, a peak being at least partially defined by a temporal section of the audio signal or visual signal, which section extends from the time of the local minimum to a temporally adjacent value of the audio signal or visual signal which has the same amplitude as the local minimum.

6. Apparatus according to Claim 5,
in which the device (11) for ascertaining items of area information is designed to determine items of area information relating to a peak (A1') of the audio signal or visual signal, which is assigned to a first minimum (45b) and is above a peak (A21') of the audio signal or visual signal that is assigned a second minimum (45a) with a smaller amplitude than the first minimum (45b), in such a manner that the items of area information relating to the first peak, together with the items of area information relating to the second peak, indicate a geometrical area between the audio signal or visual signal and a lower boundary line of the first peak (A21').

7. Apparatus according to one of the preceding claims,
in which the ascertaining device is designed to calculate the geometrical area of a trough or peak, which is assigned to a local extreme value, as items of area information.

8. Apparatus according to one of the preceding claims,
in which the ascertaining device (11) is designed to allocate a time value to the items of area information for a trough or peak, which time value has been taken from the temporal section which defines the trough or peak, by means of a sequence of area information/time value tuples.

9. Apparatus according to Claim 8,
in which the time value is the time of the local extreme value assigned to the trough or peak.

10. Apparatus according to one of the preceding claims,
in which the ascertaining device (11) is designed to ascertain quantitative values as items of area information.

11. Apparatus according to Claim 10,
which also has the following feature:

    a device (12) for post-processing the items of area information corresponding to a plurality of peaks or troughs.

12. Apparatus according to Claim 11,
in which the post-processing device (12) is designed to suppress peaks or troughs, the items of area information for which are less than a predetermined threshold value, during further processing.

13. Apparatus according to Claim 11 or 12,
in which the post-processing device (12) is designed to ascertain a series of area information changes by determining a ratio of in each case temporally successive items of area information or by forming a difference between two successive items of area information in each case.

14. Apparatus according to Claim 11, 12 or 13,
in which the post-processing device (12) is designed to examine the series of items of area information for repeating sequences of items of area information.

15. Apparatus according to Claim 14,
in which the post-processing device (12) is designed to segment the audio signal or visual signal according to repeating sequences.

**16.** Apparatus according to one of Claims 11 to 15,
in which the post-processing device (12) is designed to determine combination pairs of identical items of area information or items of area information which differ by less than a predetermined tolerance and to calculate an item of frequency information relating to the audio signal or visual signal using a time difference between times of the items of area information in a combination pair.

**17.** Apparatus according to one of Claims 11 to 13, in which the post-processing device (12) is designed to determine abrupt area information changes in the series of items of area information and to segment the audio signal or visual signal in the event of abrupt area information changes.

**18.** Apparatus according to one of Claims 11 to 17,
in which the post-processing device (12) is designed to normalize items of area information in order to obtain a series of normalized items of area information.

**19.** Apparatus according to one of Claims 11 to 18,
in which the post-processing device (12) is designed to obtain a longitudinal extent of peaks or troughs using the items of area information and associated times in order to be able to determine whether the audio signal or visual signal is an audio signal containing speech or instrumental music.

**20.** Apparatus according to one of the preceding claims,
in which the ascertaining device (11) is designed to ascertain a series of items of area information or volume information,
the apparatus also having a normalization device which is designed to calculate a total area or a total volume by adding at least two elements in the series of items of area information or volume information and is also designed to divide the elements in the series by the total area or the total volume in order to obtain a normalized series.

**21.** Apparatus according to Claim 20,
in which the normalization device is designed to add all elements in a segment of the series, a segment being a master pattern which is repeated in a series which has not been segmented.

**22.** Method for setting up an audio signal or visual signal database (22), having the following steps:

characterizing (20) an audio signal or visual signal having an amplitude/time profile with local extreme values in order to obtain items of area information for an audio signal or visual signal, comprising:

determining (10) the local extreme values of the audio signal or visual signal, a local extreme value being defined by a time and an amplitude; and
ascertaining (11) items of area information relating to troughs or peaks of the audio signal or visual signal in the case of a one-dimensional amplitude of the audio signal or visual signal or items of volume information relating to troughs or peaks of the audio signal or visual signal in the case of a two-dimensional amplitude of the audio signal or visual signal, a trough or peak being defined by a temporal section (42, 47) of the audio signal or visual signal, the section of the audio signal or visual signal extending from the time of a local extreme value (43) to a temporally adjacent value (44) of the audio signal or visual signal that has the same amplitude as the local extreme value, the items of area information or volume information relating to a plurality of peaks or troughs being characteristic of the audio signal or visual signal;
supplying (21) a plurality of audio signals or visual signals to the characterizing step (20) in order to obtain a feature vector (MM1, MM2, MM3) for each audio signal or visual signal, which feature vector has been derived from the items of area information for the audio signal or visual signal; and
storing (23) feature vectors (MM1, MM2, MM3) for the audio signals or visual signals, each feature vector being assigned an identifier (ID1, ID2, ID3) of the audio signal or visual signal, from which identifier the respective feature vector has been determined.

**23.** Method for identifying an audio signal or visual signal using an audio signal or visual signal database (22) which stores feature vectors (MM1, MM2, MM3) in a manner assigned to respective audio signal or visual signal identifiers (ID1, ID2, ID3), having the following steps:

setting up an audio signal or visual signal database (22) according to Claim 22, and
comparing a feature vector, which has been derived from the items of area information or volume information which are characteristic of a test audio signal or a visual test signal, with feature vectors stored in the audio signal or visual signal database (22) in order to make a statement on the audio signal or visual signal.

24. Computer program having a program code for carrying out a method according to each of Claims 22 and 23 if the program runs on a computer.

**Revendications**

1. Dispositif pour construire une base de données (22) de signaux audio ou de signaux vidéo, possédant les caractéristiques suivantes :

un dispositif de caractérisation (20) d'un signal audio ou d'un signal vidéo, lequel présente une courbe d'amplitude/temps avec des valeurs extrêmes locales, afin d'obtenir des informations de surface pour un signal audio ou un signal vidéo, le dispositif de caractérisation présentant les caractéristiques suivantes :

un équipement (10) pour définir les valeurs extrêmes locales du signal audio ou vidéo, chaque valeur extrême locale étant définie au moins partiellement par un instant respectif et une amplitude : et
un équipement (11) pour déterminer des informations de surface des creux ou des crêtes du signal audio ou vidéo dans le cas d'une amplitude unidimensionnelle du signal audio ou vidéo ou des informations de volume des creux ou des crêtes du signal audio ou vidéo dans le cas d'une amplitude bidimensionnelle du signal audio ou vidéo, chaque creux ou chaque crête étant au moins partiellement défini(e) par une portion temporelle (42, 47) du signal audio ou vidéo, la portion temporelle du signal audio ou vidéo s'étendant de l'instant d'une valeur extrême locale (43) à une valeur voisine dans le temps (44) du signal audio ou vidéo qui présente la même amplitude que la valeur extrême locale correspondante, les informations de surface ou les informations de volume de plusieurs creux ou crêtes étant caractéristiques pour le signal audio ou le signal vidéo ;
un équipement (21) pour acheminer plusieurs signaux audio ou signaux vidéo au dispositif de caractérisation (20) afin d'obtenir pour chaque signal audio ou signal vidéo un vecteur de caractéristique (MM1, MM2, MM3) qui est dérivé des informations de surface du signal audio ou du signal vidéo : et
un équipement (23) pour enregistrer les vecteurs de caractéristique (MM1, MM2, MM3) pour les signaux audio ou les signaux vidéo, à chaque vecteur de caractéristique étant associé un identificateur (ID1, ID2, ID3) du signal audio ou du signal vidéo à partir duquel a été déterminé le vecteur de caractéristique correspondant.

2. Dispositif pour identifier un signal audio ou un signal vidéo en utilisant une base de données (22) de signaux audio ou de signaux vidéo qui enregistre des vecteurs de caractéristique (MM1, MM2, MM3) en association avec des identificateurs (ID1, ID2, ID3) de signal audio ou de signal vidéo respectifs, possédant les caractéristiques suivantes :

un dispositif pour construire une base de données (22) de signaux audio ou de signaux vidéo selon la revendication 1 ; et
un équipement pour comparer un vecteur de caractéristique, lequel est dérivé des informations de surface ou des informations de volume qui sont caractéristiques pour un signal audio de test ou un signal de test vidéo, avec les vecteurs de caractéristiques enregistrés dans la base de données (22) de signaux audio ou de signaux vidéo afin de pouvoir émettre une affirmation concernant le signal audio ou vidéo.

3. Dispositif selon la revendication 1 ou la revendication 2,
dans lequel l'équipement (10) pour définir est configuré pour définir les maximums locaux du signal audio ou du signal vidéo, et
dans lequel l'équipement (11) pour déterminer des informations de surface est configuré pour déterminer les informations de surface des creux du signal audio ou du signal vidéo, un creux étant défini par une portion temporelle du signal audio ou vidéo qui s'étend de l'instant du maximum local à une valeur voisine dans le temps du signal audio ou vidéo qui présente la même amplitude que le maximum local.

4. Dispositif selon la revendication 3,
dans lequel l'équipement (11) pour déterminer des informations de surface est configuré pour déterminer les informations de surface relatives à un creux (AB2) du signal audio ou du signal vidéo, lequel est associé à un maximum local (41c) qui est présent au-dessus d'un creux (AB1) du signal audio ou du signal vidéo auquel est associé un autre maximum local (41d) ayant une amplitude plus faible que ledit maximum local, de telle sorte que les informations de surface de l'un des creux (AB2), combinées avec les informations de surface de l'autre creux (AB1), renvoient à une surface géométrique entre le signal audio ou le signal vidéo et une ligne de délimitation supérieure dudit creux (AB2).

5. Dispositif selon l'une des revendications précédentes,
dans lequel l'équipement (10) pour définir est configuré pour définir les minimums locaux du signal audio ou du signal vidéo, et
dans lequel l'équipement (11) pour déterminer des informations de surface est configuré pour déterminer les informations de surface des crêtes du signal audio ou du signal vidéo, une crête étant définie au moins partiellement par une portion temporelle du signal audio ou vidéo qui s'étend de l'instant du minimum local à une valeur voisine dans le temps du signal audio ou vidéo qui présente la même amplitude que le minimum local.

6. Dispositif selon la revendication 5,
dans lequel l'équipement (11) pour déterminer des informations de surface est configuré pour déterminer les informations de surface relatives à une crête (A1') du signal audio ou du signal vidéo, laquelle est associée à un premier minimum (45b) qui est présent au-dessus d'une crête (A21') du signal audio ou du signal vidéo à laquelle est associé un deuxième minimum (45a) ayant une amplitude plus faible que le premier minimum (45b), de telle sorte que les informations de surface de 1a première crête, combinées avec les informations de surface de la deuxième crête, renvoient à une surface géométrique entre le signal audio ou le signal vidéo et une ligne de délimitation inférieure de la première crête (A21').

7. Dispositif selon l'une des revendications précédentes,
dans lequel le dispositif pour déterminer est configuré pour calculer comme informations de surface la surface géométrique d'un creux ou d'une crête qui est associé(e) à ladite valeur extrême locale.

8. Dispositif selon l'une des revendications précédentes,
dans lequel le dispositif (11) pour déterminer est configuré pour affecter aux informations de surface pour un creux ou une crête une valeur de temps, laquelle est prélevée de la portion temporelle par laquelle est défini(e) le creux ou la crête, ce qui produit une suite de n-uplets d'informations de surface/valeur de temps.

9. Dispositif selon la revendication 8,
dans lequel la valeur de temps est l'instant de la valeur extrême locale qui est associé au creux ou à la crête.

10. Dispositif selon l'une des revendications précédentes,
dans lequel le dispositif (11) pour déterminer est configuré pour déterminer des valeurs quantitatives en tant qu'informations de surface.

11. Dispositif selon la revendication 10,
qui présente en outre la caractéristique suivante :

un équipement (12) pour le traitement postérieur des informations de surface qui correspondent à plusieurs creux ou crêtes.

12. Dispositif selon la revendication 11,
dans lequel l'équipement (12) pour le traitement postérieur est configuré pour inhiber lors d'un traitement postérieur les creux ou les crêtes dont les informations de surface sont inférieures à une valeur de seuil prédéfinie.

13. Dispositif selon la revendication 11 ou 12,
dans lequel l'équipement (12) pour le traitement postérieur est configuré pour déterminer une suite de modifications des informations de surface en définissant un rapport entre des informations de surface qui se suivent respectivement dans le temps ou en calculant une différence entre deux informations de surface qui se suivent respectivement dans le temps.

14. Dispositif selon la revendication 11, 12 ou 13,
dans lequel l'équipement (12) pour le traitement postérieur est configuré pour examiner la suite d'informations de surface à la recherche de séquences d'informations de surface qui se répètent.

**15.** Dispositif selon la revendication 14,
dans lequel l'équipement (12) pour le traitement postérieur est configuré pour segmenter le signal audio ou le signal vidéo conformément aux séquences qui se répètent.

**16.** Dispositif selon l'une des revendications 11 à 15,
dans lequel l'équipement (12) pour le traitement postérieur est configuré pour définir des paires combinées d'informations de surface identiques ou d'informations de surface qui se différencient de moins qu'une tolérance prédéfinie, et pour calculer une information de fréquence relative au signal audio ou au signal vidéo au moyen d'une différence de temps entre les instants des informations de surface d'une paire combinée.

**17.** Dispositif selon l'une des revendications 11 à 13,
dans lequel l'équipement (12) pour le traitement postérieur est configuré pour définir des modifications brutales des informations de surface dans la suite d'informations de surface et pour segmenter le signal audio ou le signal vidéo en présence de modifications brutales des informations de surface.

**18.** Dispositif selon l'une des revendications 11 à 17,
dans lequel l'équipement (12) pour le traitement postérieur est configuré pour normaliser les informations de surface afin d'obtenir une suite d'informations de surface normalisées.

**19.** Dispositif selon l'une des revendications 11 à 18,
dans lequel l'équipement (12) pour le traitement postérieur est configuré pour obtenir une extension longitudinale des creux ou des crêtes en utilisant les informations de surface et les instants associés, afin de pouvoir défini,r si le signal audio ou le signal vidéo est un signal audio avec parole ou avec un instrument de musique.

**20.** Dispositif selon l'une des revendications précédentes,
dans lequel l'équipement (11) pour déterminer est configuré pour déterminer une suite d'informations de surface ou d'informations de volume,
le dispositif présentant en outre un équipement de normalisation qui est configuré pour calculer une surface totale ou un volume total en additionnant au moins deux éléments de la suite d'informations de surface ou d'informations de volume, et qui est en outre configuré pour diviser les éléments de la suite par la surface totale ou le volume total afin d'obtenir une suite normalisée.

**21.** Dispositif selon la revendication 20,
dans lequel l'équipement de normalisation est configuré pour additionner tous les éléments d'un segment de la suite, un segment représentant un modèle originel qui se répète dans une suite non segmentée.

**22.** Procédé pour construire une base de données (22) de signaux audio ou de signaux vidéo, comprenant les étapes suivantes :

caractérisation (20) d'un signal audio ou d'un signal vidéo, lequel présente une courbe d'amplitude/temps avec des valeurs extrêmes locales, afin d'obtenir des informations de surface pour un signal audio ou un signal vidéo, comprenant :

la définition (10) des valeurs extrêmes locales du signal audio ou vidéo, une valeur extrême locale étant définie par un instant et une amplitude ; et
la détermination (11) d'informations de surface des creux ou des crêtes du signal audio ou vidéo dans le cas d'une amplitude unidimensionnelle du signal audio ou vidéo ou d'informations de volume des creux ou des crêtes du signal audio ou vidéo dans le cas d'une amplitude bidimensionnelle du signal audio ou vidéo, un creux ou une crête étant défini(e) par une portion temporelle (42, 47) du signal audio ou vidéo, la portion du signal audio ou vidéo s'étendant de l'instant d'une valeur extrême locale (43) à une valeur voisine dans le temps (44) du signal audio ou vidéo qui présente la même amplitude que la valeur extrême locale, les informations de surface ou les informations de volume de plusieurs creux ou crêtes étant caractéristiques pour le signal audio ou le signal vidéo ;
acheminement (21) de plusieurs signaux audio ou signaux vidéo en vue de la caractérisation (20) afin d'obtenir pour chaque signal audio ou signal vidéo un vecteur de caractéristique (MM1, MM2, MM3) qui est dérivé des informations de surface du signal audio ou du signal vidéo ; et
enregistrement (23) des vecteurs de caractéristique (MM1, MM2, MM3) pour les signaux audio ou les signaux vidéo, à chaque vecteur de caractéristique étant associé un identificateur (ID1, ID2, ID3) du signal audio ou du signal vidéo à partir duquel a été déterminé le vecteur de caractéristique correspondant.

**23.** Procédé pour identifier un signal audio ou un signal vidéo en utilisant une base de données (22) de signaux audio ou de signaux vidéo qui enregistre des vecteurs de caractéristique (MM1, MM2, MM3) en association avec des identificateurs (ID1, ID2, ID3) de signal audio ou de signal vidéo respectifs, comprenant les étapes suivantes :

construction d'une base de données (22) de signaux audio ou de signaux vidéo selon la revendication 22 ; et comparaison d'un vecteur de caractéristique, lequel est dérivé des informations de surface ou des informations de volume qui sont caractéristiques pour un signal audio de test ou un signal de test vidéo, avec les vecteurs de caractéristiques enregistrés dans la base de données (22) de signaux audio ou de signaux vidéo afin de pouvoir émettre une affirmation concernant le signal audio ou vidéo.

**24.** Programme informatique comprenant un code de programme pour mettre en oeuvre un procédé selon chacune des étapes 22 ou 23 lorsque le programme est exécuté sur un ordinateur.

Einrichtung zum Bestimmen von lokalen Extremwerten **10**

Einrichtung zum Ermitteln von Flächen- bzw. Volumeninfos für Berge oder Täler **11**

Einrichtung zum Nachverarbeiten **12**

Inf.-signal mit 1d-Amplitude oder 2d-Amplitude

Merkmalsvektor, Spracherkennung, Musikinstr.-erk., Melodie-erk., Polyphonklangerk.

## Fig. 1

Vorrichtung zum Charakterisieren **20**

mehrere Inf.-signale

Steuereinrichtung **21**

Informationssignaldatenbank **22**

| MM1 | ID1 |
| MM2 | ID2 |
| MM3 | ID3 |

**23**

## Fig. 2

22

20

Test-
Inf.-signal → | Vorrichtung<br>zum<br>Charakterisieren | Test-<br>MM →

23

| MM1 | ID1 |
|------|-----|
| MM2 | ID2 |
| MM3 | ID3 |
| . | |
| . | |
| . | |

Informationssignal-
datenbank

↓

Aussage über
Test.-Inf.-signal

## Fig. 3

Fig. 4

gesprochener Vokal "o" (Frequenz ~100 Hz)

Fig. 5

Zeit [s]

EP 1 523 719 B1

Streckungsfaktor c'; $V_{ges}=V_{12}+V_{23}+...$

$V'_{ges}=c \cdot V_{12}+c \cdot V_{23}=c \cdot V_{ges}$

Normierung: $\dfrac{c \cdot V_{12}}{c \cdot V_{ges}}=\dfrac{V'_{12}}{V'_{ges}}=\dfrac{V_{12}}{V_{ges}}$

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5918223 A